# FASCICULE DE BREVET EUROPEEN

(11) **EP 3 724 261 B1**
(45) Date de publication et mention de la délivrance du brevet: **22.04.2026**
(21) Numéro de dépôt: 18827189.4
(22) Date de dépôt: 26.11.2018
(51) Int. Cl.: C08J 5/24, C08G 8/04, C08G 8/20, C08L 61/12, B60C 1/00

(54) **PROCÉDÉ DE FABRICATION D'UN PRODUIT RENFORCÉ PAR UN ÉLÉMENT DE RENFORT**
VERFAHREN ZUR HERSTELLUNG EINES DURCH EIN VERSTÄRKUNGSELEMENT VERSTÄRKTEN PRODUKTS
METHOD FOR PRODUCING A PRODUCT REINFORCED BY A REINFORCING ELEMENT

(30) Priorité: 15.12.2017 FR 1762247
(43) Date de publication de la demande: 21.10.2020
(73) Titulaire: COMPAGNIE GENERALE DES ETABLISSEMENTS MICHELIN, 63000 Clermont-Ferrand (FR)
(72) Inventeur: PATAUT, Gaël, 63040 Clermont-Ferrand Cedex 9 (FR); DOISNEAU, David, 63040 Clermont-Ferrand Cedex 9 (FR)
(74) Mandataire: M.F.P. Michelin
(86) Numéro de dépôt international: PCT/FR2018/052982
(87) Numéro de publication internationale: WO 2019/115900

(56) Documents cités:
- WO-A1-2016/116468
- WO-A1-2016/116470
- WO-A1-2017/198967

## Description

Le domaine de la présente invention est celui des produits renforcés par au moins un élément de renfort tels que ceux utilisés dans le domaine des pneumatiques.

La présente invention est plus particulièrement relative à un procédé de fabrication d'un produit renforcé d'au moins un élément de renfort comprenant une étape de fabrication d'une composition comprenant un mélange de deux composés, une étape de noyage d'un ou plusieurs élément(s) de renfort dans cette composition et une étape de réticulation par chauffage d'une résine à base des deux composés, un produit renforcé d'au moins un élément de renfort obtenu par ce procédé, un composite d'élastomère comprenant ce produit renforcé d'au moins un élément de renfort, ainsi qu'un pneumatique comprenant ce produit renforcé d'au moins un élément de renfort ou ce composite.

On connaît de l'état de la technique un procédé de fabrication d'un produit renforcé comprenant une matrice et des éléments de renfort noyés dans la matrice. Ce procédé comprend une étape de fabrication d'une composition comprenant un mélange de deux composés formant des constituants de base d'une résine. Afin de mélanger les deux composés et d'obtenir une composition liquide facilement manipulable, notamment pour pouvoir noyer les éléments de renfort dans cette composition, on utilise un solvant, dans des quantités relativement importantes, afin de solubiliser les deux composés. Des exemples de solvants, par exemple organiques, couramment utilisés sont le méthanol et l'éthylène glycol. Une telle composition liquide présente un temps d'ouverture relativement satisfaisant. On rappelle que, de façon connue par l'homme du métier, le temps d'ouverture est la durée pendant laquelle la composition est utilisable dans des conditions normales.

Puis, on noie les éléments de renfort dans la composition liquide. Enfin, on réalise une étape de réticulation de la résine par chauffage de la composition de façon à former la matrice dans laquelle sont noyés les éléments de renfort.

L'utilisation de solvants pour assurer le mélangeage des deux composés et la manipulabilité de la composition nécessite une ou plusieurs étapes d'évacuation des solvants. Une partie significative des solvants est ainsi notamment évacuée par évaporation lors de l'étape de réticulation de la résine par chauffage. Or, une telle évaporation crée un retrait au sein de la matrice, c'est-à-dire une contraction géométrique de la matrice, et donc une variation dimensionnelle du produit renforcé, plus ou moins prévisible.

Des exemples de matériaux renforcés et de procédés pour leur fabrication sont décrits dans les documents WO 2016/116470 A1, WO 2016/116468 A1 et WO 2017/198967 A1.

L'invention a pour but d'obtenir des produits renforcés en réduisant autant que faire se peut la quantité de solvants utilisés pour mélanger les constituants de base de la résine, notamment pour éviter le retrait de la matrice.

Dans un premier mode de réalisation, l'invention a pour objet un procédé de fabrication d'un produit renforcé (34) comprenant une matrice (38) à base d'une composition et au moins un élément de renfort (36), le ou les éléments de renfort étant noyés dans la matrice (38), dans lequel :
- on réalise une étape de fabrication de la composition comprenant un mélange comprenant:
   - au moins un composé A1 présentant une température de fusion T1, et
   - au moins un composé A2 présentant une température de fusion T2,
   en mélangeant au moins le composé A1 et au moins le composé A2 à une température Tm telle que :
   - T1 ≤ Tm < T2 de façon à solubiliser A2 dans A1 et d'obtenir la composition à l'état liquide, la composition étant dépourvue de tout solvant organique ou d'eau ;
- puis, on noie le ou les élément(s) de renfort (36) dans la composition à
   l'état liquide,
- puis, le composé A1 réagissant avec le composé A2 pour former la résine par chauffage à partir d'une température Tn, on réalise une étape de réticulation d'une résine à base d'au moins le composé A1 et d'au moins le composé A2 par chauffage de la composition à au moins la température Tn telle que T1 ≤ Tm <Tn de façon à former la matrice (38)

dans laquelle est/sont noyé(s) le ou les élément(s) de renfort (36) défini comme un élément tridimensionnel permettant le renforcement mécanique d'une matrice dans laquelle cet élément de renfort tridimensionnel est destiné à être noyé;
dans lequel au moins un des composés A1, A2 est choisi parmi :
   - un composé A11 comprenant au moins deux fonctions, l'une de ces fonctions étant une fonction hydroxyméthyle, l'autre étant une fonction aldéhyde ou une fonction hydroxyméthyle, ou
   - un composé A12 choisi dans le groupe constitué par le 1,2-benzène-dicarboxaldéhyde, le 1,3-benzènedicarboxaldéhyde, le 1,4-benzène-dicarboxaldéhyde, le 2-hydroxybenzène-1,3,5-tricarbaldéhyde et les mélanges de ces composés, ou
   - un mélange d'un composé A11 et d'un composé A12.

L'invention permet d'obtenir des produits renforcés en supprimant la quantité de solvants utilisés pour mélanger les constituants de base de la résine, notamment pour éviter le retrait de la matrice. En effet, le procédé selon l'invention permet, lors de l'étape de mélangeage de faire fondre le composé A1 en choisissant une température Tm supérieure à T1. Le composé A1 fondu forme alors un solvant liquide permettant ainsi la solubilisation de l'autre composé A2 sans qu'il soit nécessaire d'ajouter de solvant contrairement à l'état de la technique. Ainsi, la composition obtenue est facilement manipulable de par son état liquide.

Le choix de Tm entre T1 et T2 permet de faire fondre A1 et le choix de Tm inférieure à Tn permet d'éviter la réticulation de la résine. Ainsi, la composition obtenue présente un temps d'ouverture relativement important permettant de mettre en œuvre l'étape de noyage sans contrainte liée à une éventuelle réticulation précoce de la résine. On notera que le procédé selon l'invention a pour avantage de permettre de noyer de façon homogène les éléments de renfort dans la matrice du fait de l'état liquide de la composition lors de l'étape de noyage sans pour autant devoir utiliser de solvant. En outre, la dispersion homogène des composés A1 et A2 dans la composition à l'état liquide assure des propriétés mécaniques homogènes dans la matrice. Le composé A1 et le composé A2 ont des structures chimiques telles qu'à la température Tn, ils réagissent ensemble.

La composition est dépourvue de tout solvant organique ou d'eau.

Dans un deuxième mode de réalisation, l'invention concerne un procédé de fabrication d'un produit renforcé (34) comprenant une matrice (38) à base d'une composition et au moins un élément de renfort (36), le ou les éléments de renfort étant noyés dans la matrice, dans lequel :
- on réalise une étape de fabrication de la composition comprenant un mélange comprenant:
   - au moins un composé A3 présentant une température de fusion T3,
   - au moins un composé A4 présentant une température de fusion T4, et
   - au moins un composé A5 présentant une température de fusion T5,

   en mélangeant au moins les composés A3, A4 et A5 à une température Tm telle que :
      Tmin ≤ Tm < Tmax dans laquelle :
      - Tmin est la température la plus basse parmi T3, T4 et T5,
      - Tmax est la température la plus haute parmi T3, T4 et T5, et
      - Tint est la température parmi T3, T4 et T5 telle que Tmin ≤ Tint ≤ Tmax,
   de façon à solubiliser au moins un ou deux des composés A3, A5, A4 respectivement dans au moins deux autres ou un autre des composés A3, A5, A4 et obtenir une composition à l'état liquide, la composition étant dépourvue de tout solvant organique ou d'eau ;
      - puis, on noie le ou les élément(s) de renfort (36) dans la composition à l'état
         liquide,
      - puis, les composés A3, A4 et A5 réagissant ensemble pour former la résine par chauffage à partir d'une température Tn, on réalise une étape de réticulation d'une résine à base d'au moins les composés A3, A4 et A5 par chauffage de la composition à au moins la température Tn telle que Tmin ≤ Tm < Tn de façon à former la matrice (38)

      dans laquelle est/sont noyé(s)le ou les élément(s) de renfort (36) défini comme un élément tridimensionnel permettant le renforcement mécanique d'une matrice dans laquelle cet élément de renfort tridimensionnel est destiné à être noyé;
      dans lequel au moins un des composés A3, A4, A5 est choisi parmi :
         - un composé A11 comprenant au moins deux fonctions, l'une de ces fonctions étant une fonction hydroxyméthyle, l'autre étant une fonction aldéhyde ou une fonction hydroxyméthyle, ou
         - un composé A12 comprenant au moins une fonction aldéhyde ou
         - un mélange d'un composé A11 et d'un composé A12.

Le procédé selon le deuxième mode de réalisation de l'invention permet, lors de l'étape de mélangeage de faire fondre un ou deux des composés A3, A4 ou A5 en choisissant une température Tm supérieure à Tmin. Les composés fondu(s) forme(nt) alors un solvant liquide permettant ainsi la solubilisation du ou des autres composés sans qu'il soit nécessaire d'ajouter de solvant contrairement à l'état de la technique.

Les composés A3, A4 et A5 ont des structures chimiques telles qu'à la température Tn, ils réagissent ensemble.

Dans un troisième mode de réalisation, l'invention concerne un procédé de fabrication d'un produit renforcé (34) comprenant une matrice (38) à base d'une composition et au moins un élément de renfort (36), le ou les éléments de renfort étant noyés dans la matrice (38), dans lequel :
- on réalise une étape de fabrication de la composition comprenant un mélange comprenant:
   - au moins un composé A3 présentant une température de fusion T3,
   - au moins un composé A4 présentant une température de fusion T4,
   - au moins un composé A5 présentant une température de fusion T5,
   - au moins un composé A6 présentant une température de fusion T6,

en mélangeant au moins les composés A3, A4, A5 et A6 à une température Tm telle que
   Tmin ≤ Tm < Tmax dans laquelle :
   - Tmin est la température la plus basse parmi T3, T4, T5 et T6, et
   - Tmax est la température la plus haute parmi T3, T4, T5 et T6 ;
   - Tint1 est la température parmi T3, T4, T5 et T6, et
   - Tint2 est la température parmi T3, T4, T5 et T6 telles que :
      Tmin ≤ Tint1 ≤ Tint2 ≤ Tmax,
de façon à solubiliser un, deux ou trois des composés A3, A4, A5, A6 dans respectivement trois, deux ou un autre des composés A3, A4, A5, A6 et obtenir une composition à l'état liquide, la composition étant dépourvue de tout solvant organique ou d'eau ;
   - puis, on noie le ou les élément(s) de renfort (36) dans la composition à l'état liquide,
   - puis, les composés A3, A4, A5 et A6 réagissant ensemble pour former la résine par chauffage à partir d'une température Tn, on réalise une étape de réticulation d'une résine à base d'au moins les composés A3, A4, A5 et A6 par chauffage de la composition à au moins la température Tn telle que Tmin ≤ Tm < Tn de façon à former la matrice (38) dans laquelle est/sont noyé(s)le ou les élément(s) de renfort (36) défini comme un élément tridimensionnel permettant le renforcement mécanique d'une matrice dans laquelle cet élément de renfort tridimensionnel est destiné à être noyé;
   dans lequel dans lequel au moins un des composés A3, A4, A5 A6 est choisi parmi :
   - un composé A11 comprenant au moins deux fonctions, l'une de ces fonctions étant une fonction hydroxyméthyle, l'autre étant une fonction aldéhyde ou une fonction hydroxyméthyle, ou
   - un composé A12 comprenant au moins une fonction aldéhyde, ou
   - un mélange d'un composé A11 et d'un composé A12.

Le procédé selon le troisième mode de réalisation de l'invention permet, lors de l'étape de mélangeage de faire fondre un ou deux des composés A3, A4, A5 ou A6 en choisissant une température Tm supérieure à Tmin. Le ou les composés fondu(s) forme(nt) alors un solvant liquide permettant ainsi la solubilisation du ou des autres composés sans qu'il soit nécessaire d'ajouter de solvant contrairement à l'état de la technique.

Les composés A3, A4, A5 et A6 ont des structures chimiques telles qu'à la température Tn, ils réagissent ensemble.

Avantageusement, le recours à un mélange de trois ou quatre composés permet d'une part de solubiliser l'ensemble des composés grâce au composé présentant la température de fusion la plus basse et, d'autre part, d'utiliser les propriétés mécaniques conférées par les autres composés présentant des températures de fusion supérieure à Tm. En outre, comme dans le premier mode de réalisation, on notera que le procédé selon l'invention a pour avantage de permettre de noyer de façon homogène les éléments de renfort dans la matrice du fait de l'état liquide de la composition lors de l'étape de noyage sans pour autant devoir utiliser de solvant.

De préférence, dans les trois modes de réalisation décrits ci-dessus, l'étape de mélangeage et l'étape de réticulation sont mises en oeuvre à la même pression, de préférence à pression atmosphérique. Plus préférentiellement, l'étape de mélangeage, l'étape de noyage et l'étape de réticulation sont mises en oeuvre à la même pression, de préférence à pression atmosphérique.

Bien évidemment, dans chacun des trois modes de réalisation décrits ci-dessus, la température pertinente pour une étape est celle mesurée à la pression à laquelle on conduit cette étape. Par exemple, les températures de fusion pertinentes pour l'étape de mélangeage sont celles mesurées à la pression à laquelle on conduit l'étape de mélangeage et les températures de fusion pertinentes pour l'étape de réticulation sont celles mesurées à la pression à laquelle on conduit l'étape de réticulation, que la pression de l'étape de mélangeage soit identique ou différente de celle de l'étape de réticulation.

Un produit renforcé comprenant une matrice et au moins un élément de renfort, le ou les éléments de renfort étant noyés dans la matrice, susceptible d'être obtenu par le procédé tel que défini précédemment, est également décrit.

Dans un mode de réalisation préféré, le produit renforcé présente une forme générale de nappe, de bande, de bandelette ou de ruban s'étendant selon une direction principale. La largeur L du produit renforcé, mesuré selon une direction perpendiculaire à la direction principale et l'épaisseur E du produit renforcé sont telles que L>E, de préférence L>10 x E.

Un composite d'élastomère comprenant une matrice d'élastomère dans laquelle est noyé au moins un produit renforcé tel que défini précédemment, est également décrit.

Un pneumatique comprenant au moins un produit renforcé tel que défini précédemment ou un composite d'élastomère tel que défini précédemment, est également décrit.

Par pce, on entend parties en poids pour cent parties d'élastomère.

D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Dans le cadre de l'invention, les produits carbonés mentionnés dans la description, peuvent être d'origine fossile ou biosourcés. Dans ce dernier cas, ils peuvent être, partiellement ou totalement, issus de la biomasse ou obtenus à partir de matières premières renouvelables issues de la biomasse.

L'invention ainsi que ses avantages seront aisément compris à la lumière de la description et des exemples de réalisation qui suivent.

Dans la présente description, sauf indication expresse différente, tous les pourcentages (%) indiqués sont des % en masse.

Par composition à l'état liquide, on entend que la composition n'est ni solide ni gazeuse. La composition liquide peut être visqueuse ou non visqueuse.

Par température ambiante d'une étape, on entend la température du milieu dans lequel on effectue cette étape, c'est-à-dire la température des locaux environnants dans lesquels on met en oeuvre l'étape. Par exemple, la température ambiante est comprise entre 20 et 30°C.

Par composition d'élastomère, on entend une composition comprenant au moins un élastomère (ou indistinctement caoutchouc) et au moins un autre constituant.

Par élastomère (ou indistinctement caoutchouc) "diénique", on entend un élastomère issu au moins en partie (c'est-à-dire un homopolymère ou un copolymère) de monomère(s) diène(s) (i.e., porteur(s) de deux doubles liaisons carbone-carbone, conjuguées ou non). Par "élastomère isoprénique", on entend un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères.

Par matrice élastomérique, on entend une matrice à comportement élastomérique.

Par "position méta l'une par rapport à l'autre", on entendra que les fonctions hydroxyle sont portées par des carbones du noyau aromatique séparés l'un de l'autre par un unique autre carbone du noyau aromatique.

Par "en position ortho d'une fonction", on entendra la position occupée par le carbone du noyau aromatique immédiatement adjacent au carbone du noyau aromatique portant la fonction.

Par "chaînon" d'un noyau, on entendra un atome constitutif du squelette du noyau. Ainsi, par exemple, un noyau benzénique comprend six chaînons, chaque chaînon étant constitué par un atome de carbone. Dans un autre exemple, un noyau furanique comprend cinq chaînons, quatre chaînons étant chacun constitué par un atome de carbone et le chaînon restant étant constitué par un atome d'oxygène.

« CHO » représente la fonction aldéhyde.

« CH2OH » représente la fonction hydroxyméthyle.

Par « polyphénol aromatique » on entend un composé aromatique comprenant au moins un noyau benzénique porteur de plus d'une fonction hydroxyle.

Par l'expression "composition à base de", il faut entendre une composition comportant le mélange et/ou le produit de réaction in situ des différents constituants utilisés, certains de ces constituants pouvant réagir et/ou étant destinés à réagir entre eux, au moins partiellement, lors des différentes phases de fabrication de la composition ; la composition pouvant ainsi être à l'état totalement ou partiellement réticulé ou à l'état non-réticulé.

Par l'expression « résine à base de », il faut bien entendu comprendre une résine comportant le mélange et/ou le produit de la réaction entre les différents constituants de base utilisés pour la condensation finale de cette résine, de préférence uniquement le produit de la réaction entre les différents constituants de base utilisés pour cette résine, certains d'entre eux pouvant être destinés à réagir ou susceptibles de réagir entre eux ou avec leur environnement chimique proche, au moins en partie, lors des différentes phases du procédé de fabrication de la composition, des composites ou du pneumatique, en particulier au cours d'une étape de cuisson. Ainsi les constituants de base sont les réactifs destinés à réagir ensemble lors de la condensation finale de la résine et ne sont pas des réactifs destinés à réagir ensemble pour former ces constituants de base.

Par élément de renfort, on entend un élément tridimensionnel permettant le renforcement mécanique d'une matrice dans laquelle cet élément de renfort tridimensionnel est destiné à être noyé.

### PROCEDE SELON L'INVENTION

Avantageusement, T1 ≤ 110°C, de préférence T1 ≤ 100°C et plus préférentiellement T1 ≤ 90°C. Ainsi, on apporte aussi peu d'énergie qu'il est possible d'en apporter de façon à faire fondre le composé A1.

Avantageusement, T1 ≥ 40°C et de préférence T1 ≥ 50°C.

Avantageusement, Tm-T1 ≥ 1°C, de préférence Tm-T1 ≥ 2°C et plus préférentiellement Tm-T1 ≥ 5°C.

Avantageusement, Tm-T1 ≤ 30°C, de préférence Tm-T1 ≤ 10°C et plus préférentiellement Tm-T1 ≤ 5°C.

Avantageusement, T2-T1 ≥ 30°C, de préférence T2-T1 ≥ 40°C et plus préférentiellement T2-T1 ≥ 50°C.

Avantageusement, T2-T1 ≤ 200°C, de préférence T2-T1 ≤ 190°C et plus préférentiellement T2-T1 ≤ 170°C.

L'écart entre les températures de fusion T1 et T2 des composés A1 et A2 est préférentiellement suffisamment élevé de façon à ce que l'intervalle de choix des températures Tm et Tn soit suffisamment élevé. Ainsi, d'une part, on réduit le risque de fusion incomplète du composé T1 et donc une mauvaise solubilisation des composés A1 et A2 qui serait due à un écart trop faible entre T1 ou T2 et Tm. D'autre part, on réduit le risque de réticulation précoce de la résine qui serait due à une mauvaise maitrise de Tn.

Dans le premier mode de réalisation, on a de préférence T2 ≥ Tn.

Dans le deuxième mode de réalisation de l'invention, on a de préférence Tint ≤ Tn ≤ Tmax.

Dans le deuxième mode de réalisation de l'invention, on plus préférentiellement Tn ≤ Tint ≤ Tmax.

Dans le troisième mode de réalisation de l'invention, on a de préférence Tint1 ≤ Tint2 ≤ Tn ≤ Tmax.

Dans le troisième mode de réalisation de l'invention, on a plus préférentiellement Tint1 ≤ Tn ≤ Tint2 ≤ Tmax.

Dans le troisième mode de réalisation de l'invention, on a encore plus préférentiellement Tn ≤ Tint1 ≤ Tint2 ≤ Tmax.

Avantageusement, dans les deuxième et troisième modes de réalisation, au moins un composé A3, A5, A4 ou A6 a une température de fusion qui est supérieure ou égale à Tn. Ainsi, on peut mettre en oeuvre le procédé avec des composés ayant des températures de fusion relativement élevées à partir du moment où l'on réalise le mélange de ceux-ci avec un composé de température de fusion suffisamment basse et en quantité suffisante pour solubiliser le mélange.

Avantageusement, Tm-Tmin ≥ 1°C, de préférence Tm-Tmin ≥ 2°C et plus préférentiellement Tm-Tmin ≥ 5°C.

Avantageusement, Tm-Tmin ≤ 30°C, de préférence Tm-Tmin ≤ 10°C et plus préférentiellement Tm-Tmin ≤ 5°C.

Avantageusement, Tmax-Tmin ≥ 30°C, de préférence Tmax-Tmin ≥ 40°C et plus préférentiellement Tmax-Tmin ≥ 50°C.

Avantageusement, Tmax-Tmin ≤ 200°C, de préférence Tmax-Tmin ≤ 190°C et plus préférentiellement Tmax-Tmin ≤ 170°C.

Dans une première variante, le procédé est tel que, lors de l'étape de fabrication de la composition, tous les composés sont à l'état solide à la température ambiante, on chauffe la composition à la température Tm strictement supérieure à la température ambiante.

Dans cette première variante, pour tous les modes de réalisation, on va chauffer au juste nécessaire pour solubiliser les composés. Ainsi, la composition obtenue est à l'état liquide à Tm et présente un temps d'ouverture relativement important permettant de mettre en oeuvre l'étape de noyage sans contrainte liée à une éventuelle réticulation précoce de la résine.

Dans cette deuxième variante, le procédé est tel que, lors de l'étape de fabrication de la composition, au moins un composé est à l'état liquide à la température ambiante et au moins un composé est à l'état solide à la température ambiante, on solubilise le composé à l'état solide dans le composé à l'état liquide à température ambiante.

Avantageusement, dans cette deuxième variante, pour le premier mode de réalisation, il n'est pas nécessaire de chauffer pour solubiliser le composé A2 dans le composé A1 car le composé A1 est déjà liquide à température ambiante. Ainsi, la composition obtenue est à l'état liquide à température ambiante et présente un temps d'ouverture relativement important permettant de mettre en oeuvre l'étape de noyage sans contrainte liée à une éventuelle réticulation précoce de la résine.

Avantageusement, dans cette deuxième variante, pour les deuxième et troisième modes de réalisation, à partir du moment où un des composés est liquide à température ambiante, les autres composés qui ont des températures de fusion plus élevées vont se solubiliser dans la composition permettant d'obtenir une composition facilement manipulable de par son état liquide.

De préférence, Tm ≤ 110°C, de préférence Tm ≤ 100°C et plus préférentiellement Tm ≤ 80°C.

De préférence, Tn ≤ 140°C, de préférence Tn ≤ 130°C et plus préférentiellement Tn ≤ 120°C.

Avantageusement, Tn-Tm ≥ 5°C et plus préférentiellement Tn-Tm ≥ 10°C.

Avantageusement, Tn-Tm ≤ 100°C et plus préférentiellement Tn-Tm ≤ 60°C.

L'écart entre les températures Tm et Tn est préférentiellement suffisamment grand pour réduire le risque de réticulation précoce de la résine.

Avantageusement, le procédé est tel que, postérieurement à l'étape de réticulation de la résine, on réalise une étape de réticulation finale de la résine par chauffage à une température Tp avec Tn < Tp.

Avantageusement, la pression à laquelle on met en oeuvre l'étape de réticulation finale est inférieure ou égale à 1,50 bar, de préférence inférieure ou égale à 1,20 bar et plus préférentiellement inférieure ou égale à 1,10 bar.

Avantageusement, la pression à laquelle on met en oeuvre l'étape de réticulation finale est strictement supérieure à 1,00 bar, de préférence supérieure ou égale à 1,01 bar et plus préférentiellement supérieure ou égale à 1,03 bar.

Ainsi, on applique une légère surpression afin de contrôler précisément les dimensions du produit renforcé.

Avantageusement, Tp ≤ 200°C.

Le procédé selon l'invention permet de mettre en oeuvre l'étape de réticulation de la résine à une température relativement basse évitant ainsi la dégradation des composés. Ainsi, l'étape de réticulation finale de la résine nécessite un apport énergétique moins important ce qui a pour avantage d'avoir un procédé moins coûteux.

### Résine

Dans le premier mode de réalisation de l'invention, la résine est obtenue par la réaction d'au moins le composé A1 et d'au moins le composé A2 qui sont décrits ci-après.

Conformément à ce premier mode de réalisation, les constituants de base de la résine comprennent donc au moins le composé A1 et au moins le composé A2. Dans une alternative, les constituants de base peuvent comprendre d'autres constituants additionnels différents du composé A1 et du composé A2. Dans une autre alternative, les constituants de base sont constitués d'au moins le composé A1 et d'au moins le composé A2.

Dans le deuxième mode de réalisation de l'invention, la résine est obtenue par la réaction d'au moins trois composés A3, A4 et A5 tels que décrits ci-après.

Conformément à ce deuxième mode de réalisation, les constituants de base de la résine comprennent donc au moins les trois composés A3, A4 et A5. Dans une alternative, les constituants de base peuvent comprendre d'autres constituants additionnels différents des composés A3, A4 et A5. Dans une autre alternative, les constituants de base sont constitués d'au moins les trois composés A3, A4 et A5.

Dans le troisième mode de réalisation de l'invention, la résine est obtenue par la réaction de quatre composés A3, A4, A5 et A6 tels que décrits ci-après.

Conformément à ce troisième mode de réalisation, les constituants de base de la résine comprennent donc au moins les quatre composés A3, A4, A5 et A6. Dans une alternative, les constituants de base peuvent comprendre d'autres constituants additionnels différents des composés A3, A5, A4 et A6. Dans une autre alternative, les constituants de base sont constitués d'au moins les quatre composés A3, A4, A5 et A6.

De préférence, dans les trois modes de réalisation décrits ci-dessus, l'homme du métier choisira les proportions des différents constituants de base de la résine de façon à obtenir les propriétés mécaniques souhaitées.

De préférence, dans le mode de réalisation où les constituants de base comprennent d'autres constituants additionnels, ces autres constituants additionnels sont dépourvus de formaldéhyde et/ou dépourvus de donneur de méthylène choisi dans le groupe constitué par l'hexa-méthylènetétramine (HMT), l'hexamethoxyméthylmélamine (H3M), l'hexaethoxyméthylmélamine, le chlorure de lauryloxyméthylpyridinium, le chlorure d'éthoxyméthylpyridinium, des polymères d'hexaméthoxyméthylmélamine de trioxanne de formaldéhyde, l'hexakis(méthoxyméthyl)mélamine, la N,N',N"-triméthyl/-N,N',N"-triméthylolmélamine, l'hexaméthylolmélamine, la N-méthylolmélamine, la N,N'-diméthylolmélamine, la N,N',N"-tris(méthoxyméthyl)mélamine, la N,N',N"-tributyl-N,N',N"-triméthylolmélamine. Plus avantageusement, ces autres constituants additionnels sont dépourvus de formaldéhyde et dépourvus des donneurs de méthylène décrits dans ce paragraphe.

Plus préférentiellement, dans le mode de réalisation où les constituants de base comprennent d'autres constituants additionnels, ces autres constituants additionnels sont dépourvus de formaldéhyde et/ou dépourvus de donneur de méthylène choisi dans le groupe constitué par l'hexaméthylènetétramine, l'hexaéthoxyméthylmélamine, l'hexaméthoxyméthylmélamine, le chlorure de lauryloxyméthylpyridinium, le chlorure d'éthoxyméthylpyridinium, l'hexaméthoxyméthylmélamine de trioxanne et les oxyméthylmélamines N-substituées répondant à la formule générale: 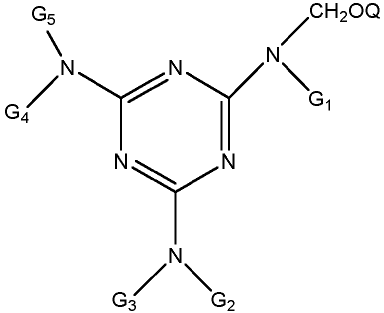 dans laquelle Q représente un groupe alkyle contenant de 1 à 8 atomes de carbone; G₁, G₂, G₃, G₄ et G₅ sont choisis, indépendamment l'un de l'autre, parmi le groupe constitué par un atome d'hydrogène, par un groupe alkyle contenant de 1 à 8 atomes de carbone, par le groupe -CH2OQ et leurs produits de condensation. Plus avantageusement, ces autres constituants additionnels sont dépourvus de formaldéhyde et dépourvus des donneurs de méthylène décrits dans ce paragraphe.

Encore plus préférentiellement, dans le mode de réalisation où les constituants de base comprennent d'autres constituants additionnels, ces autres constituants additionnels sont dépourvus de formaldéhyde et/ou dépourvus de donneur de méthylène. Plus avantageusement, ces autres constituants additionnels sont dépourvus de formaldéhyde et dépourvus des donneurs de méthylène.

Par dépourvu de formaldéhyde ou dépourvu de donneur de méthylène, on entend que le taux massique total du formaldéhyde ou du ou des donneurs de méthylène appartenant aux groupes décrits ci-dessus en poids total du ou des composés dans les constituants de base est inférieur ou égal à 10%, de préférence à 5%, plus préférentiellement à 2% et encore plus préférentiellement à 1%.

Par dépourvu de formaldéhyde et dépourvu de donneur de méthylène, on entend que le taux massique total du formaldéhyde et du ou des donneurs de méthylène appartenant aux groupes décrits ci-dessus en poids total du ou des composés dans les constituants de base est inférieur ou égal à 10%, de préférence à 5%, plus préférentiellement à 2% et encore plus préférentiellement à 1%.

Ainsi, les résines décrites ci-dessus sont à base de composés respectant la réglementation visant à exclure certains composés tels que le formaldéhyde. En outre, le formaldéhyde est un composé dérivé du pétrole dont on souhaite le plus possible s'affranchir pour des raisons de raréfaction.

### Agent desséchant

Avantageusement, le procédé est tel que, lors de l'étape de fabrication de la composition, on ajoute un agent desséchant.

De préférence, l'agent desséchant est choisi parmi le kaolin, la montmorillonite, le mica, le sulfate de magnésium, le chlorure de magnésium et le mélange de ces agents desséchants.

Dans le cas où un dégagement d'eau survient, au cours de la réaction entre les composés, on introduit un agent desséchant qui a pour but de capter cette eau.

L'ajout de cet agent desséchant peut notamment permettre de moduler les propriétés mécaniques de la résine.

### Additifs

La composition du procédé de l'invention peut bien entendu comporter tout ou partie des additifs habituels pour compositions telles que celles utilisées pour former des produits renforcés par des éléments de renfort; on citera par exemple des charges, des colorants, des antioxydants ou autre stabilisants.

Avantageusement, la charge est choisie parmi le noir de carbone et la silice.

### Composés A1, A2, A3, A4, A5 ou A6

Au moins un constituant de base de la résine est un composé A1, A2, A3, A4, A5 ou A6, ce composé A1, A2, A3, A4, A5 ou A6 étant choisi parmi :
- un composé A11 comprenant au moins un noyau aromatique porteur d'au moins deux fonctions, l'une de ces fonctions étant une fonction hydroxyméthyle, l'autre étant une fonction aldéhyde ou une fonction hydroxyméthyle ou
- un composé A12 comprenant au moins un noyau aromatique porteur d'au moins une fonction aldéhyde ou
- un mélange d'un composé A11 et d'un composé A12. Dans le cas où le constituant de base de la résine est le composé A1 ou A2, le composé A12 est choisi dans le groupe constitué par le 1,2-benzène-dicarboxaldéhyde, le 1,3-benzène-dicarboxaldéhyde, le 1,4-benzène-dicarboxaldéhyde, le 2-hydroxybenzène-1,3 5-tricarbaldéhyde et les mélangés de ces composes.

Dans un premier mode de réalisation, dans le cas où le constituant de base de la résine est le composé A3, A4, A5 ou A6, le composé A12 comprend au moins un noyau aromatique porteur d'au moins une fonction aldéhyde.

Plus préférentiellement, le composé A12 est porteur d'au moins deux fonctions aldéhyde.

Encore plus préférentiellement, le noyau aromatique du composé A12 est porteur de deux fonctions aldéhydes.

Dans un mode de réalisation, dans le cas où le constituant de base de la résine est le composé A3, A4, A5 ou A6, le noyau aromatique du composé A12 est choisi dans le groupe constitué par un noyau benzénique et un noyau furanique, de préférence le noyau aromatique de l'aldéhyde aromatique est un noyau benzénique.

De préférence, dans le cas où le constituant de base de la résine est le composé A3, A4, A5 ou A6, le composé A12 est choisi dans le groupe constitué par le 1,2-benzène-dicarboxaldéhyde, le 1,3-benzène-dicarboxaldéhyde, le 1,4-benzène-dicarboxaldéhyde, le 2-hydroxybenzène-1,3,5-tricarbaldéhyde et les mélanges de ces composés.

Dans le premier mode de réalisation, dans le cas où le constituant de base de la résine est le composé A3, A4, A5 ou A6, le composé A12 est, dans une variante, de formule générale (A): 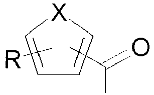 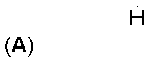 dans laquelle :
X comprend N, S ou O
R représente -H ou -CHO.

Préférentiellement, le composé A12 est de formule générale (A'):

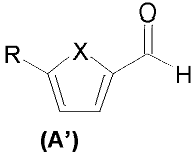

Encore plus préférentiellement, R représente -CHO.

Selon un mode de réalisation préférentiel, X représente O.

Dans le cas où le constituant de base de la résine est le composé A3, A4, A5 ou A6, une variante du composé A12 a la formule générale (A), dans laquelle X représente O et R représente-H. Le composé A12 utilisé est alors de formule (Ba):

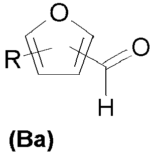

Dans le cas où le constituant de base de la résine est le composé A3, A4, A5 ou A6, une variante du composé A12 a la formule générale **(A')**, dans laquelle X représente O et R représente -H. Le composé A12 utilisé est alors le furfuraldéhyde et est de formule **(B'a):**

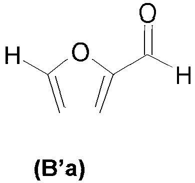

Dans le cas où le constituant de base de la résine est le composé A3, A4, A5 ou A6, une autre variante du composé A12 a la formule générale **(A),** dans laquelle X représente O et R représente -CHO. Le composé A12 utilisé est alors de formule (Bb):

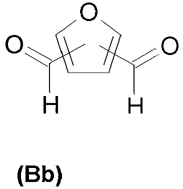

Dans le cas où le constituant de base de la résine est le composé A3, A4, A5 ou A6, une autre variante du composé A12 a la formule générale (A'), dans laquelle X représente O et R représente -CHO. Le composé A12 utilisé est alors le 2,5-furanedicarboxaldéhyde et est de formule (B'b):

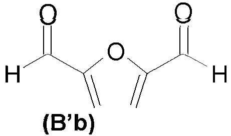

Dans un autre mode de réalisation, X comprend N.

De préférence, le composé A12 est choisi dans le groupe constitué par le furfuraldéhyde, le 2,5-furanedicarboxaldéhyde et les mélanges de ces composés.

Dans le cas où le constituant de base de la résine est le composé A3, A4, A5 ou A6, une variante du composé A12 a la formule générale **(A),** dans laquelle X représente NH. Le composé A12 utilisé est de formule (Ca):

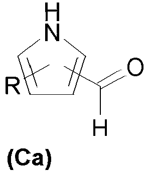

Dans le cas où le constituant de base de la résine est le composé A3, A4, A5 ou A6, une variante du composé A12 a la formule générale **(A')**, dans laquelle X représente NH. Le composé A12 utilisé est de formule **(C'a)**:

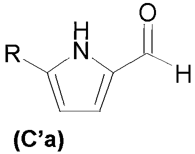

De préférence, R représente -CHO dans la variante du composé A12 de formule **(C'a)** et le composé A12 obtenu est alors le 2,5-1H-pyrroledicarboxaldéhyde.

Dans le cas où le constituant de base de la résine est le composé A3, A4, A5 ou A6, une autre variante du composé A12 a la formule générale **(A),** dans laquelle X représente NT₁ avec T₁ représentant un groupe alkyle, aryle arylalkyle, alkylaryle ou cycloalkyle. Le composé A12 utilisé est de formule **(Cb):**

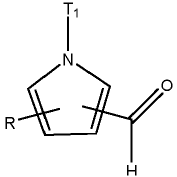

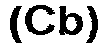

Dans un autre mode de réalisation, X comprend S.

Dans le cas où le constituant de base de la résine est le composé A3, A4, A5 ou A6, une variante du composé A12 a la formule générale **(A),** X représente S. Le composé A12 utilisé est de formule **(Da):**

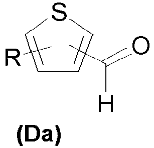

Dans le cas où le constituant de base de la résine est le composé A3, A4, A5 ou A6, une variante du composé A12 a la formule générale **(A'),** dans laquelle X représente S. Le composé A12 utilisé est de formule **(D'a):**

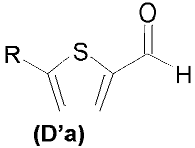

De préférence, R représente -CHO dans la variante du composé A12 de formule **(IV'a)** et est alors le 2,5-thiophènedicarboxaldéhyde.

Dans le cas où le constituant de base de la résine est le composé A3, A4, A5 ou A6, une autre variante du composé A12 a la formule générale (A), dans laquelle X représente ST₂ avec T₂ représentant un groupe alkyle, aryle arylalkyle, alkylaryle ou cycloalkyle. Le composé A12 utilisé est de formule **(Db):**

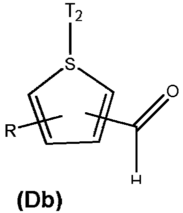

Dans le cas où le constituant de base de la résine est le composé A3, A4, A5 ou A6, encore une autre variante du composé A12 a la formule générale **(A),** dans laquelle X représente T₃-S-T₂ avec T₂, T₃ représentant chacun indépendamment l'un de l'autre un groupe alkyle, aryle arylalkyle, alkylaryle ou cycloalkyle. Le composé A12 utilisé est de formule **(Dc):**

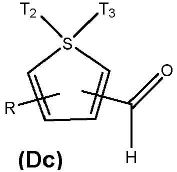

Dans le cas où le constituant de base de la résine est le composé A3, A4, A5 ou A6, encore une autre variante du composé A12 a la formule générale **(A),** dans laquelle X représente S=O. Le composé A12 utilisé est de formule **(Dd)**

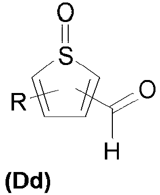

Dans le cas où le constituant de base de la résine est le composé A3, A4, A5 ou A6, encore une autre variante du composé A12 a la formule générale **(A),** dans laquelle X représente O=S=O. Le composé A12 utilisé est de formule **(De)**

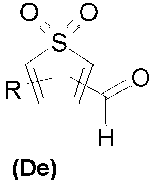

Parmi les différents modes de réalisation décrits ci-dessus, on préfèrera les modes de réalisation et les variantes dans lesquels X représente NH, S ou O. Dans ces modes de réalisation et variantes, on pourra avoir R représentant -H ou -CHO et de préférence R représentant -CHO. Dans ces modes de réalisation et variantes, on aura préférentiellement R en position 5 et le groupe-CHO en position 2 sur le noyau aromatique (formule générale **(A')**).

Dans un deuxième mode de réalisation, le composé A11 est un composé aromatique comprenant au moins un noyau aromatique porteur d'au moins deux fonctions, l'une de ces fonctions étant une fonction hydroxyméthyle, l'autre étant une fonction aldéhyde ou une fonction hydroxyméthyle.

Ainsi, dans ce deuxième mode de réalisation, c'est ledit noyau aromatique qui est porteur des fonctions hydroxyméthyle et aldéhyde. Le composé A11 répond donc, dans ce deuxième mode de réalisation, à la formule générale (I) :

HO-CH₂-Ar-B (I)

où Ar représente un noyau aromatique et B représente CHO ou CH₂OH.

Le noyau aromatique est avantageusement un noyau à 5 ou 6 chaînons, comprenant, en tant que chaînon, des atomes de carbone et éventuellement un ou plusieurs hétéroatomes, en particulier des atomes d'azote, d'oxygène, de soufre, éventuellement oxydé sous forme de N-oxyde ou de S-oxyde. Dans une variante, le noyau aromatique comprend 0, 1 ou 2 hétéroatome(s). Le reste du noyau aromatique peut être substitué ou non.

Le noyau aromatique peut porter 0, 1 ou 2 fonctions aldéhyde, avantageusement 0 ou 1 fonction aldéhyde, à condition que le composé A11 comprenant au moins deux fonctions, l'une de ces fonctions étant une fonction hydroxyméthyle, l'autre étant une fonction aldéhyde ou une fonction hydroxyméthyle.

Le noyau aromatique peut porter 1, 2 ou 3 fonctions hydroxyméthyle, avantageusement 1 ou 2 fonction hydroxyméthyle, à condition que le composé A11 comprenant au moins deux fonctions, l'une de ces fonctions étant une fonction hydroxyméthyle, l'autre étant une fonction aldéhyde ou une fonction hydroxyméthyle.

En outre, le noyau aromatique peut également porter 0, 1 ou 2 autre(s) fonction(s), en particulier hydroxyle.

Dans le mode de réalisation dans lequel le noyau aromatique est un noyau à 6 chaînons, les fonctions B et hydroxyméthyle sont avantageusement en position méta ou en para l'une par rapport à l'autre.

Dans le mode de réalisation dans lequel le noyau aromatique est un noyau à 5 chaînons, le noyau peut comprendre un ou plusieurs hétéroatomes, en particulier des atomes d'azote, d'oxygène, de soufre, éventuellement oxydé sous forme de N-oxyde ou de S-oxyde. Avantageusement, le noyau aromatique comprend 1 ou 2 hétéroatome(s), de préférence 1 hétéroatome.

Dans ce mode de réalisation dans lequel le noyau aromatique est un noyau à 5 chaînons, au moins une des trois conditions suivantes est respectée, à condition que le composé A11 comprenant au moins deux fonctions, l'une de ces fonctions étant une fonction hydroxyméthyle, l'autre étant une fonction aldéhyde ou une fonction hydroxyméthyle :
- le noyau aromatique comprend 0 ou une seule fonction aldéhyde ;
- le noyau aromatique comprend une ou deux fonctions hydroxyméthyle ;
- outre les fonctions aldéhyde et hydroxyméthyle, le reste du noyau aromatique n'est pas substitué.

Avantageusement, ces trois conditions sont respectées.

Dans un premier cas, le noyau aromatique comprend
- une seule fonction aldéhyde ;
- une seule fonction hydroxyméthyle ;
- outre les fonctions aldéhyde et hydroxyméthyle, le reste du noyau aromatique n'est pas substitué.

Dans un deuxième cas, le noyau aromatique comprend
- 0 fonction aldéhyde ;
- deux fonctions hydroxyméthyle ;
- outre les fonctions hydroxyméthyle, le reste du noyau aromatique n'est pas substitué.

Avantageusement, le composé A11 répond à la formule générale (II) : 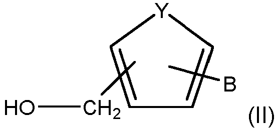 où B représente CHO ou CH₂OH, Y représente O, NR₁, NO, S, SO, SO₂, SR₂R₃, R₄ représente un hydrogène, un groupe alkyle, aryle, arylalkyle, alkylaryle ou cycloalkyle, R₂, R₃ représentent chacun, indépendamment les uns des autres, un hydrogène, un groupe alkyle, aryle, arylalkyle, alkylaryle ou cycloalkyle.

Avantageusement, le composé A11 est de formule générale (II') : 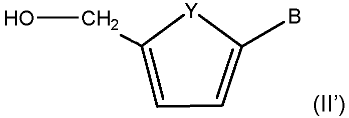 dans laquelle Y, B sont tels que définis précédemment.

Dans un mode de réalisation particulièrement avantageux, B représente CHO. Dans un autre mode de réalisation, B représente CH₂OH.

Selon un mode de réalisation préférentiel, Y représente O.

Dans une variante, le composé A11 est de formule (IIa) : 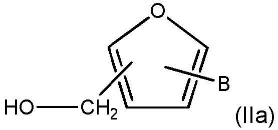 B étant tel que défini précédemment.

Et plus particulièrement, le composé A11 répond à la formule générale (II'a1) ou (II'a2) :

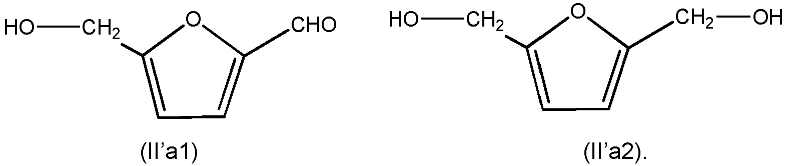

Le 5-(hydroxyméthyl)-furfural (II'a1) est un composé A11 particulièrement adapté, étant donné que ce composé organique peut facilement être issu de ressources renouvelables. En effet, il est issu notamment de la déshydratation de certains sucres tels que le fructose, le glucose, le sucrose, la cellulose et l'insuline.

Dans un autre mode de réalisation, Y représente NR1 ou NO, avantageusement NR1. R1 représente un hydrogène, un groupe alkyle, aryle, arylalkyle, alkylaryle ou cycloalkyle.

Dans une variante, le composé est de formule (Ilb) : 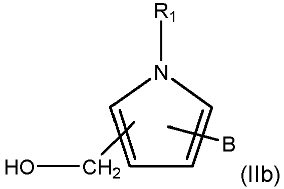
B étant tel que défini précédemment
et plus particulièrement de formule (II'b1) ou (II'b2) : 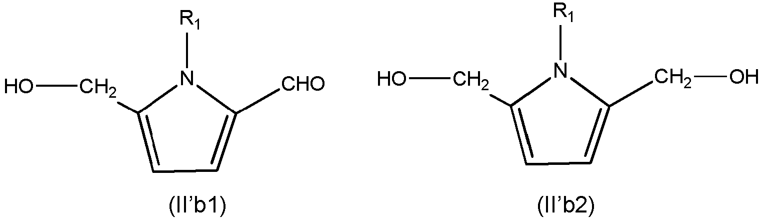
dans lesquelles R₁ est tel que défini précédemment. Avantageusement R₁ représente un hydrogène ou un groupe alkyle en C₁-C₆.

Dans un autre mode de réalisation, Y représente S, SO, SO₂ ou SR₂R₃ avec R₂ et R₃ tels que définis précédemment.

Dans une variante, le composé est de formule (Ilc) :
B étant tel que défini précédemment 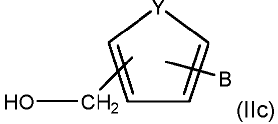
avec Y représente S, SR₂R₃, SO, SO₂, R₂, R₃ représentent chacun, indépendamment les uns des autres, un hydrogène, un groupe alkyle, aryle, arylalkyle, alkylaryle ou cycloalkyle, B, R₂ et R₃ étant tels étant tels que définis précédemment ;
et plus particulièrement de formule (Il'c1) ou (II'c2) : 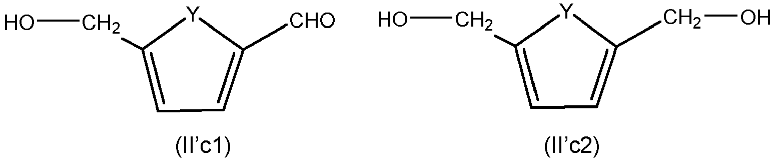
dans laquelle Y représente S, SR₂R₃, SO, SO₂, R₂, R₃ représentent chacun, indépendamment les uns des autres, un hydrogène, un groupe alkyle, aryle, arylalkyle, alkylaryle ou cycloalkyle.

Le composé peut ainsi être :

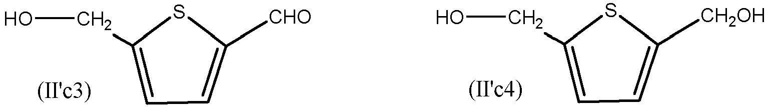

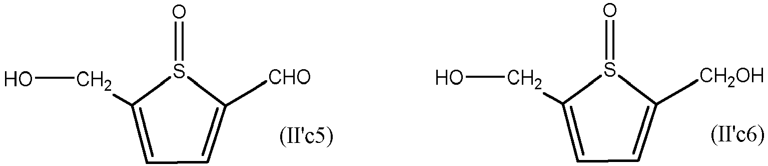

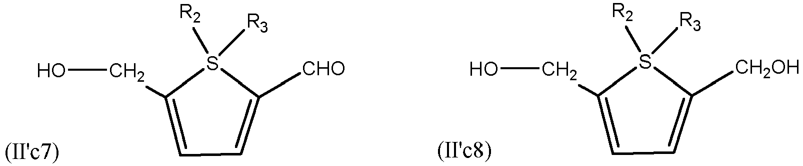

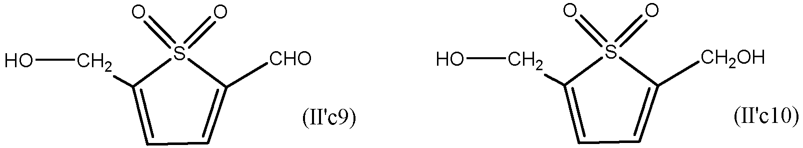

Avantageusement R₂, R₃ représentent chacun, l'un indépendamment de l'autre, un radical alkyle en C₁-C₆.

Le composé est avantageusement de formule (lI'c3) ou (II'c4).

Dans une autre variante, le noyau aromatique est un noyau à 6 chaînons, pouvant comprendre 0, un ou plusieurs hétéroatomes, en particulier d'azote, éventuellement oxydé sous forme de N-oxyde. Dans une variante, le noyau aromatique comprend 0, 1, ou 2 hétéroatome(s).

Les fonctions B et hydroxyméthyle sont avantageusement en position méta ou en para l'une par rapport à l'autre.

Le noyau aromatique peut porter 0, 1 ou 2 fonctions aldéhyde, avantageusement 0 ou 1 fonction aldéhyde.

Le noyau aromatique peut porter 1, 2 ou 3 fonctions hydroxyméthyle, avantageusement 1 ou 2 fonctions hydroxyméthyle.

En outre, le noyau aromatique peut également porter 0, 1 ou 2 autre(s) fonction(s), en particulier hydroxyle.

Avantageusement, le composé A11 est de formule générale (III) : 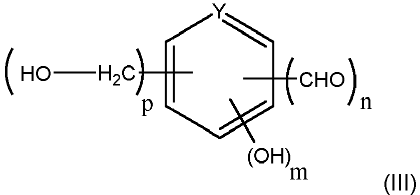 dans laquelle Y représente C ou NR₁, n vaut 0, 1 ou 2, m vaut 0 ou 1, p vaut 1, 2 ou 3. R₁ représente un hydrogène, un groupe alkyle, aryle, arylalkyle, alkylaryle ou cycloalkyle. Ainsi, p+n>1 avec p>0.

Avantageusement R1 représente un hydrogène ou un groupe alkyle en C1-C6.

Dans une variante, n vaut 1, m vaut 0 et p vaut 1.

Dans une autre variante, n vaut 1, m vaut 1 et p vaut 1.

Dans une autre variante, n vaut 2, m vaut 1 et p vaut 1.

Dans une autre variante, n vaut 1, m vaut 1 et p vaut 2.

Dans une autre variante, n vaut 0, m vaut 0 et p vaut 2.

Dans une autre variante, n vaut 0, m vaut 1 et p vaut 2.

Dans une autre variante, n vaut 1, m vaut 1 et p vaut 2.

Dans une autre variante, n vaut 0, m vaut 1 et p vaut 3.

Préférentiellement le noyau aromatique du composé A11 est un noyau benzénique. Plus préférentiellement, cet aldéhyde est choisi dans le groupe constitué par le 2-hydroxymethyl-benzène-1-carboxaldéhyde, le 3- hydroxymethyl-benzène-1-carboxaldéhyde, le 4-hydroxymethyl-benzène-1-carboxaldéhyde, le 3-hydroxymethyl-6-hydroxy-benzène-1-carboxaldéhyde, le 3-hydroxymethyl-4-hydroxy-benzène-1-carboxaldéhyde, le 3-hydroxymethyl-2-hydroxy-benzène-1-carboxaldéhyde, le 3-hydroxymethyl-2-hydroxy-benzène-1,5-dicarboxaldéhyde, le 5-hydroxymethyl-2-hydroxy-benzène-1,3-dicarboxaldéhyde, le 3,5-hydroxymethyl-4-hydroxy-benzène-1-carboxaldéhyde, le 3,5-hydroxymethyl-2-hydroxy-benzène-1-carboxaldéhyde, le 1,2-hydroxymethyl-benzène, le 1,3-hydroxymethyl-benzène, le 1,4-hydroxymethyl-benzène, le 1,3-hydroxymethyl-6-hydroxy-benzène, le 1,3-hydroxymethyl-4-hydroxy-benzène, le 1,3-hydroxymethyl-2-hydroxy-benzène, le 1,3,5-hydroxymethyl-2-hydroxy-benzène, le 1,3-hydroxymethyl-6-hydroxybenzène, le 1,3,5-hydroxymethyl-4-hydroxy-benzène, le 1,3,2-hydroxymethyl-2-hydroxy-benzène et les mélanges de ces composés.

Encore plus préférentiellement le composé A11 utilisé est le 1-hydroxymethyl-benzène-4-carboxaldéhyde de formule (IIIa) ou le 1,4-hydroxymethyl-benzène de formule (IIIb) :

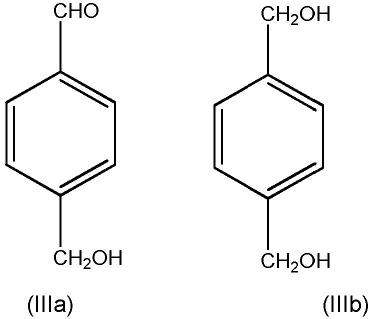

Parmi les autres avantages liés à l'utilisation des composés A11 et/ou A12, on notera que la composition peut être dépourvue de formaldéhyde dont il est souhaitable de diminuer l'utilisation, voire de la supprimer à terme dans les compositions adhésives, en raison de l'évolution récente de la réglementation européenne sur ce type de composé. En outre, le formaldéhyde est un composé dérivé du pétrole dont on souhaite le plus possible s'affranchir pour des raisons de raréfaction.

### Composé A1, A2, A3, A4, A5 ou A6

Au moins un constituant de base de la résine est un composé A1, A2, A3, A4, A5 ou A6.

Avantageusement, ce composé A1, A2, A3, A4, A5 ou A6 est un phénol.

Avantageusement, le phénol est choisi parmi :
∘ un polyphénol aromatique A21 comprenant au moins un noyau aromatique porteur d'au moins deux fonctions hydroxyle en position méta l'une par rapport à l'autre, les deux positions ortho d'au moins une des fonctions hydroxyle étant non substituées
∘ un monophénol aromatique A22 comprenant au moins un noyau aromatique à six chainons portant une unique fonction hydroxyle,
   - les deux positions ortho de la fonction hydroxyle étant non substituées ou
   - au moins une position ortho et la position para de la fonction hydroxyle étant non substituées
∘ un mélange de A21 et A22.

Dans un mode de réalisation, le phénol est un polyphénol aromatique A21 comportant un ou plusieurs noyau(x) aromatique(s). Le polyphénol aromatique comprend au moins un noyau aromatique porteur d'au moins deux fonctions hydroxyle en position méta l'une par rapport à l'autre, les deux positions ortho d'au moins une des fonctions hydroxyle étant non substituées.

Dans un autre mode de réalisation, le phénol est un monophénol aromatique A22 comprenant au moins un noyau aromatique à six chainons portant une unique fonction hydroxyle. Sur ce monophénol aromatique, les deux positions ortho de la fonction hydroxyle sont non substituées, ou bien au moins une position ortho et la position para de la fonction hydroxyle sont non substituées.

Dans encore un autre mode de réalisation, le phénol est un mélange du polyphénol aromatique A21 et du monophénol aromatique A22 tels que décrits ci-dessus.

Conformément à l'invention, le polyphénol aromatique A21 peut être, dans un mode de réalisation, une molécule simple de polyphénol aromatique comprenant un ou plusieurs noyaux aromatiques, au moins un de ces noyaux aromatiques, voire chaque noyau aromatique, étant porteur d'au moins deux fonctions hydroxyle en position méta l'une par rapport à l'autre, les deux positions ortho d'au moins une des fonctions hydroxyle étant non substituées.

De façon analogue, le monophénol aromatique A22 peut être, dans un mode de réalisation, une molécule simple de monophénol aromatique comprenant un ou plusieurs noyaux aromatiques à six chainons, au moins un de ces noyaux aromatiques à six chainons, voire chaque noyau aromatique à six chainons, étant porteur d'une unique fonction hydroxyle, les deux positions ortho de la fonction hydroxyle sont non substituées, ou bien, au moins une position ortho et la position para de la fonction hydroxyle sont non substituées.

De telles molécules simples ne comprennent pas de motif répétitif.

Conformément à l'invention, le polyphénol aromatique A21 peut être, dans un autre mode de réalisation, une résine pré-condensée à base :
- d'au moins un polyphénol aromatique, comprenant au moins un noyau aromatique porteur d'au moins deux fonctions hydroxyle en position méta l'une par rapport à l'autre, les deux positions ortho d'au moins une des fonctions hydroxyle étant non substituées ; et
- d'au moins un composé comprenant au moins une fonction aldéhyde et/ou au moins un composé comprenant au moins deux fonctions hydroxyméthyle portées par un noyau aromatique.

Une telle résine pré-condensée à base de polyphénol aromatique est conforme à l'invention et comprend, contrairement à la molécule simple décrite ci-dessus, un motif répétitif. En l'espèce, le motif répétitif comprend au moins un noyau aromatique porteur d'au moins deux fonctions hydroxyle en position méta l'une par rapport à l'autre.

D'une façon analogue et conformément à l'invention, le monophénol aromatique A22 peut être, dans un autre mode de réalisation, une résine pré-condensée à base :
- d'au moins un monophénol aromatique comprenant au moins un noyau aromatique à six chainons portant une unique fonction hydroxyle :
   ∘ les deux positions ortho de la fonction hydroxyle sont non substituées, ou
   ∘ au moins une position ortho et la position para de la fonction hydroxyle sont non substituées;
- d'au moins un composé comprenant au moins une fonction aldéhyde et/ou au moins un composé comprenant au moins deux fonctions hydroxyméthyle portées par un noyau aromatique.

Une telle résine pré-condensée à base de monophénol aromatique est conforme à l'invention et comprend, contrairement à la molécule simple décrite ci-dessus, un motif répétitif. En l'espèce, le motif répétitif comprend au moins un noyau aromatique à six chainons porteur d'une unique fonction hydroxyle.

Dans un autre mode de réalisation, le phénol est un mélange d'un polyphénol aromatique formant une molécule simple et d'une résine pré-condensée à base de polyphénol aromatique.

Dans encore un autre mode de réalisation, le phénol est un mélange d'un monophénol aromatique formant une molécule simple et d'une résine pré-condensée à base de monophénol aromatique.

Dans les modes de réalisation particuliers qui suivent, on décrit le ou les noyaux aromatiques du polyphénol aromatique et/ou du monophénol aromatique. Par souci de clarté, on y décrit le « polyphénol aromatique » et/ou le « monophénol aromatique » sous sa forme de molécule simple. Ce polyphénol aromatique et/ou ce monophénol aromatique pourra ensuite être condensé et définira en partie le motif répétitif. Les caractéristiques de la résine pré-condensée sont décrites plus en détail par la suite.

### Polyphénol aromatique A21

Dans un mode de réalisation préféré, le noyau aromatique du polyphénol aromatique est porteur de trois fonctions hydroxyle en position méta les unes par rapport aux autres.

De préférence, les deux positions ortho de chaque fonction hydroxyle sont non substituées. On entend par là que les deux atomes de carbone situés de part et d'autre (en position ortho) de l'atome de carbone hydroxylé (i.e., porteur de la fonction hydroxyle) sont porteurs d'un simple atome d'hydrogène.

Encore plus préférentiellement, le reste du noyau aromatique du polyphénol aromatique est non substitué. On entend par là que les autres atomes de carbone du reste du noyau aromatique (ceux autres que les atomes de carbone porteurs des fonctions hydroxyle) sont porteurs d'un simple atome d'hydrogène.

Dans un mode de réalisation, le polyphénol aromatique comprend plusieurs noyaux aromatiques, au moins deux d'entre eux étant chacun porteur d'au moins deux fonctions hydroxyle en position méta l'une par rapport à l'autre, les deux positions ortho d'au moins une des fonctions hydroxyle d'au moins un noyau aromatique étant non substituées.

Dans un mode de réalisation préféré, au moins un des noyaux aromatiques du polyphénol aromatique est porteur de trois fonctions hydroxyle en position méta les unes par rapport aux autres.

De préférence, les deux positions ortho de chaque fonction hydroxyle d'au moins un noyau aromatique sont non substituées.

Encore plus préférentiellement, les deux positions ortho de chaque fonction hydroxyle de chaque noyau aromatique sont non substituées.

Avantageusement, le ou chaque noyau aromatique du polyphénol aromatique est un noyau benzénique.

A titre d'exemple de polyphénol aromatique comportant un seul noyau aromatique, on peut citer en particulier, le résorcinol et le phloroglucinol, pour rappel de formules développées respectivement (IV) et (V):

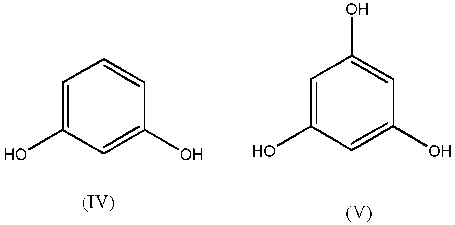

A titres d'exemples, dans le cas où le polyphénol aromatique comporte plusieurs noyaux aromatiques, au moins deux de ces noyaux aromatiques, identiques ou différents, sont choisis parmi ceux de formules générales : 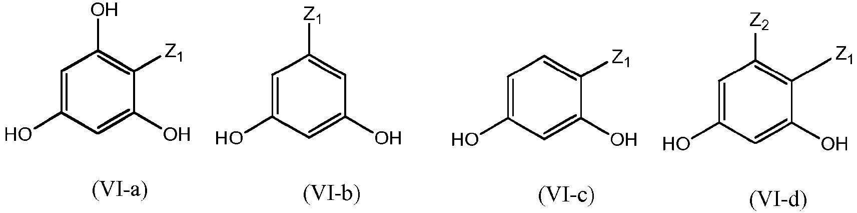 dans lesquelles les symboles Z₁, Z₂, identiques ou différents s'ils sont plusieurs sur le même noyau aromatique, représentent un atome (par exemple carbone, soufre ou oxygène) ou un groupe de liaison par définition au moins divalent, qui relie au moins ces deux noyaux aromatiques au reste du polyphénol aromatique.

Un autre exemple de polyphénol aromatique est le 2,2',4,4'-tétrahydroxydiphényl sulfide de formule développée suivante (VII) :

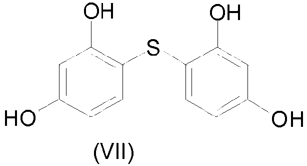

Un autre exemple de polyphénol aromatique est le 2,2',4,4'-tétrahydroxydiphényl benzophénone de formule développée suivante (VIII) :

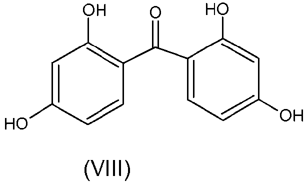

On note que chaque composé VII et VIII est un polyphénol aromatique comportant deux noyaux aromatiques (de formules VI-c) dont chacun est porteur d'au moins deux (en l'occurrence de deux) fonctions hydroxyle en position méta l'une par rapport à l'autre.

On note que dans le cas d'un polyphénol aromatique comportant au moins un noyau aromatique conforme à la formule VI-b, les deux positions ortho de chaque fonction hydroxyle d'au moins un noyau aromatique sont non substituées. Dans le cas d'un polyphénol aromatique comportant plusieurs noyaux aromatiques conformes à la formule VI-b, les deux positions ortho de chaque fonction hydroxyle de chaque noyau aromatique sont non substituées.

Selon un mode de réalisation de l'invention, le polyphénol aromatique est choisi dans le groupe constitué par le résorcinol (IV), le phloroglucinol (V), le 2,2',4,4'-tétrahydroxydiphényl sulfide (VII), la 2,2',4,4'-tétrahydroxybenzophenone (VIII), et les mélanges de ces composés. Dans un mode de réalisation particulièrement avantageux, le polyphénol aromatique est le phloroglucinol.

Dans un mode de réalisation, le polyphénol aromatique A21 comprend une résine pré-condensée à base du polyphénol aromatique tel que décrit dans l'un quelconque de ces modes de réalisations.

Cette résine pré-condensée est avantageusement à base :
- d'au moins un polyphénol aromatique tel que défini précédemment, et préférentiellement choisi dans le groupe constitué par le résorcinol, le phloroglucinol, le 2,2',4,4'-tétrahydroxydiphényl sulfide, la 2,2',4,4'-tétrahydroxybenzophenone, et leurs mélanges ; et
- d'au moins un composé susceptible de réagir avec le polyphénol aromatique comprenant au moins une fonction aldéhyde et/ou au moins un composé susceptible de réagir avec le polyphénol aromatique comprenant au moins deux fonctions hydroxyméthyle, et préférentiellement un aldéhyde aromatique comprenant au moins un noyau aromatique porteur d'au moins une fonction aldéhyde.

Le composé susceptible de réagir avec le polyphénol aromatique peut être un composé A1, A3 ou A5 tel que défini précédemment ou tout autre aldéhyde. Avantageusement, ledit composé est choisi dans le groupe constitué par un composé aromatique comprenant un noyau aromatique porteur d'au moins deux fonctions, l'une de ces fonctions étant une fonction hydroxyméthyle, l'autre étant une fonction aldéhyde ou une fonction hydroxyméthyle, le formaldéhyde, le furfuraldéhyde, le 2,5-furanedicarboxaldéhyde, le 1,4-benzènedicarboxaldéhyde, le 1,3-benzènedicarboxaldéhyde, le 1,2-benzènedicarboxaldéhyde et les mélanges de ces composés. Très avantageusement, lorsque le composé susceptible de réagir avec le polyphénol aromatique est un composé aromatique comprenant un noyau aromatique porteur d'au moins deux fonctions, l'une de ces fonctions étant une fonction hydroxyméthyle, l'autre étant une fonction aldéhyde ou une fonction hydroxyméthyle, ce composé est choisi dans le groupe constitué par le 5-(hydroxyméthyl)-furfural, le 2,5-di(hydroxyméthyle)furane et les mélanges de ces composés.

Ainsi, dans la résine pré-condensée à base de polyphénol aromatique, le motif répétitif répond aux caractéristiques du polyphénol aromatique définies précédemment à l'exception qu'au moins un des atomes de carbone du noyau aromatique, qui était non substitué, est relié à un autre motif.

Quel que soit le composé autre que le polyphénol aromatique à la base de la résine pré-condensée, cette résine pré-condensée est dépourvue de formaldéhyde libre. En effet, même dans le cas où la résine pré-condensée est à base d'un polyphénol aromatique tel que décrit précédemment et de formaldéhyde, le formaldéhyde ayant déjà réagi avec le polyphénol aromatique, la résine pré-condensée est dépourvue de formaldéhyde libre susceptible de pouvoir réagir avec un composé A1 conforme à l'invention dans une étape ultérieure.

Le polyphénol aromatique A21 peut également comprendre un mélange d'une molécule libre de polyphénol aromatique et d'une résine pré-condensée à base de polyphénol aromatique, telle que décrite précédemment. En particulier, le polyphénol aromatique A21 peut également comprendre un mélange de phloroglucinol et d'une résine pré-condensée à base de phloroglucinol.

### Monophénol aromatique A22

Le monophénol aromatique A22 peut être conforme à deux variantes. Dans une variante, les deux positions ortho de la fonction hydroxyle sont non substituées. Dans une autre variante, au moins une position ortho et la position para de la fonction hydroxyle sont non substituées.

Avantageusement, dans la variante dans laquelle au moins une position ortho et la position para de la fonction hydroxyle sont non substituées, une unique position ortho est non substituée et la position para de la fonction hydroxyle est non substituée.

De préférence, quelle que soit la variante, les deux positions ortho de la fonction hydroxyle sont non substituées. On entend par là que les deux atomes de carbone situés de part et d'autre (en position ortho) de l'atome de carbone hydroxylé (i.e., porteur de la fonction hydroxyle) sont porteurs d'un simple atome d'hydrogène.

Encore plus préférentiellement, le reste du noyau aromatique est non substitué. On entend par là que les autres atomes de carbone du reste du noyau aromatique (ceux autres que les atomes de carbone porteurs des fonctions hydroxyle) sont porteurs d'un simple atome d'hydrogène.

Dans un mode de réalisation, le monophénol aromatique comprend plusieurs noyaux aromatiques à six chainons, au moins deux d'entre eux étant chacun porteur d'une unique fonction hydroxyle et, pour au moins une des fonctions hydroxyles, les deux positions ortho de la fonction hydroxyle sont non substituées, ou au moins une position ortho et la position para de la fonction hydroxyle sont non substituées.

De préférence, les deux positions ortho de chaque fonction hydroxyle d'au moins un noyau aromatique à six chainons sont non substituées.

Encore plus préférentiellement, les deux positions ortho de chaque fonction hydroxyle de chaque noyau aromatique à six chainons sont non substituées.

Encore plus préférentiellement, le reste de chacun des noyaux aromatiques est non substitué. On entend par là que les autres atomes de carbone du reste de chaque noyau aromatique (ceux autres que les atomes de carbone porteurs des fonctions hydroxyle ou porteurs du groupe liant entre eux les noyaux aromatiques) sont porteurs d'un simple atome d'hydrogène.

Avantageusement, le ou chaque noyau aromatique du monophénol aromatique est un noyau benzénique.

De préférence, le monophénol aromatique est choisi dans le groupe constitué par le phénol, l'ortho crésol, le méta crésol, le para crésol, l'ortho chlorophénol, le méta chlorophénol, le para chlorophénol, l'acide 2-hydroxybenzoïque, l'acide 3-hydroxybenzoïque, l'acide 4-hydroxybenzoïque le 4-vinylphénol, le 4-éthylphénol, le 4-isopropylphénol, le 4-isobutylphénol, l'acide paracoumarique et les mélanges de ces composés.

Dans un mode de réalisation, le monophénol aromatique A22 comprend une résine pré-condensée à base du monophénol aromatique tel que décrit dans l'un quelconque de ces modes de réalisations.

Cette résine pré-condensée est avantageusement à base :
- d'au moins un monophénol aromatique tel que défini précédemment, et préférentiellement choisi dans le groupe constitué par le phénol, l'ortho crésol, le méta crésol, le para crésol, l'ortho chlorophénol, le méta chlorophénol, le para chlorophénol, l'acide 2-hydroxybenzoïque, l'acide 3-hydroxybenzoïque, l'acide 4-hydroxybenzoïque le 4-vinylphénol, le 4-éthylphénol, le 4-isopropylphénol, le 4-isobutylphénol, l'acide paracoumarique et les mélanges de ces composés ; et
- d'au moins un composé susceptible de réagir avec le monophénol aromatique comprenant au moins une fonction aldéhyde et/ou au moins un composé susceptible de réagir avec le monophénol aromatique comprenant au moins deux fonctions hydroxyméthyle et préférentiellement un aldéhyde aromatique comprenant au moins un noyau aromatique porteur d'au moins une fonction aldéhyde.

Le composé susceptible de réagir avec le monophénol aromatique peut être un composé A1, A3 ou A5 tel que défini précédemment ou tout autre aldéhyde. Avantageusement, ledit composé susceptible de réagir avec le monophénol aromatique est choisi dans le groupe constitué par un composé aromatique comprenant un noyau aromatique porteur d'au moins deux fonctions, l'une de ces fonctions étant une fonction hydroxyméthyle, l'autre étant une fonction aldéhyde ou une fonction hydroxyméthyle, le formaldéhyde, le furfuraldéhyde, le 2,5-furanedicarboxaldéhyde, le 1,4-benzènedicarboxaldéhyde, le 1,3-benzènedicarboxaldéhyde, le 1,2-benzènedicarboxaldéhyde et les mélanges de ces composés. Très avantageusement, lorsque le composé est un composé aromatique comprenant un noyau aromatique porteur d'au moins deux fonctions, l'une de ces fonctions étant une fonction hydroxyméthyle, l'autre étant une fonction aldéhyde ou une fonction hydroxyméthyle, ce composé est choisi dans le groupe constitué par le 5-(hydroxyméthyl)-furfural, le 2,5-di(hydroxyméthyle)furane et les mélanges de ces composés.

Ainsi, dans la résine pré-condensée à base de monophénol aromatique, le motif répétitif répond aux caractéristiques du monophénol aromatique définies précédemment à l'exception qu'au moins un des atomes de carbone du noyau aromatique à six chainons, qui était non substitué, est relié à un autre motif.

Quel que soit le composé autre que le monophénol aromatique à la base de la résine pré-condensée, cette résine pré-condensée est dépourvue de formaldéhyde libre. En effet, même dans le cas où la résine pré-condensée est à base d'un monophénol aromatique tel que décrit précédemment et de formaldéhyde, le formaldéhyde ayant déjà réagi avec le monophénol aromatique, la résine pré-condensée est dépourvue de formaldéhyde libre susceptible de pouvoir réagir avec un composé A1, A3 ou A5 conforme à l'invention dans une étape ultérieure.

Le monophénol aromatique A22 peut également comprendre un mélange d'une molécule libre de monophénol aromatique et d'une résine pré-condensée à base de monophénol aromatique, telle que décrite précédemment. En particulier, le monophénol aromatique A22 peut également comprendre un mélange de phénol et d'une résine pré-condensée à base de phénol.

### Mélange de polyphénol aromatique A21 et de monophénol aromatique A22

Le phénol peut également comprendre un mélange d'un polyphénol aromatique A21 et d'un monophénol aromatique A22, tel que décrit précédemment.

De préférence, le phénol comprend un mélange de polyphénol aromatique et d'une résine pré-condensée à base de polyphénol aromatique.

### PRODUIT RENFORCE OBTENU PAR LE PROCÉDÉ SELON L'INVENTION

Un produit renforcé par au moins un élément de renfort susceptible d'être est obtenu par le procédé tel que défini précédemment est également décrit.

Avantageusement, le produit renforcé comprend un ou plusieurs éléments de renfort noyés dans la matrice à base de la composition et dans le cas de plusieurs éléments de renfort, les éléments de renfort sont agencés côte à côte selon une direction principale. Chaque élément de renfort comprend au moins un élément filaire, et peut, dans certains modes de réalisation, comprendre plusieurs éléments filaires.

Dans un mode de réalisation, l'élément de renfort peut comprendre un élément filaire et éventuellement une gaine revêtant individuellement l'élément filaire ou collectivement plusieurs éléments filaires. La gaine peut comprendre une ou plusieurs couches, chaque couche étant à base d'une composition polymérique, par exemple telle que décrite dans WO2010/136389, WO2010/105975, WO2011/012521, WO2011/051204, WO2012/016757, WO2012/038340, WO2012/038341, WO2012/069346, WO2012/104279, WO2012/104280 et WO2012/104281.

Par élément filaire, on entend un élément présentant une longueur au moins 10 fois plus grande que la plus grande dimension de sa section quelle que soit la forme de cette dernière : circulaire, elliptique, oblongue, polygonale, notamment rectangulaire ou carrée ou ovale. Dans le cas d'une section rectangulaire, l'élément filaire présente la forme d'une bande.

Dans un autre mode de réalisation, l'élément de renfort peut être un tricot ou un tissu.

Un tricot est un assemblage d'éléments filaires tels que définis ci-dessus et comprenant des mailles formées par un ou plusieurs de ces éléments filaires. Chaque maille comprend une boucle entrelacée avec une autre boucle. On peut mentionner par exemple les tricots de contexture jersey ou à côte anglaise pour les tricots à mailles cueillies et les tricots de contexture charmeuse ou atlas pour les tricots à mailles jetées.

Un tissu est un assemblage d'une première famille d'éléments filaires, appelés éléments filaires de chaine, sensiblement parallèles entre eux, et d'une deuxième famille d'éléments filaires, appelés éléments filaires de trame, sensiblement parallèles entre eux. De préférence, les éléments filaires de la première famille sont sensiblement perpendiculaires aux éléments filaires de la deuxième famille.

L'élément filaire peut être métallique ou textile.

Un élément filaire métallique peut être un monofilament élémentaire métallique. Un tel monofilament élémentaire métallique comprend une âme en acier, éventuellement revêtue d'une ou plusieurs couches d'un revêtement qui peut être métallique et/ou à base d'une composition adhésive non métallique.

Le revêtement métallique comprend un métal choisi parmi le zinc, le cuivre, l'étain, le cobalt et les alliages de ces métaux. Comme exemples d'alliages de ces métaux, on citera le laiton et le bronze. L'acier de l'âme est un acier au carbone comprenant entre 0,1% et 1,2% de carbone en masse, au plus 11% en masse de chrome, moins de 1% en masse de chacun des éléments suivants : manganèse, silicium, aluminium, bore, cobalt, cuivre, molybdène, nickel, niobium, titane, tungstène, vanadium, zirconium, phosphore, soufre, azote, le reste étant constitué de fer et d'impuretés inévitables résultant de l'élaboration. L'acier peut présenter une microstructure perlitique, ferritique, austénitique, bainitique, martensitique ou une microstructure issue d'un mélange de ces microstructures.

Le monofilament élémentaire métallique présente une résistance mécanique allant de 1000 MPa à 5000 MPa. De telles résistances mécaniques correspondent aux grades d'acier courramment rencontrés dans le domaine du pneumatique, à savoir, les grades NT (Normal Tensile), HT (High Tensile), ST (Super Tensile), SHT (Super High Tensile), UT (Ultra Tensile), UHT (Ultra High Tensile) et MT (Mega Tensile), l'utilisation de résistances mécaniques élevées permettant éventuellement un renforcement amélioré de la matrice dans laquelle l'élément de renfort est destiné à être noyé.et un allègement de la matrice ainsi renforcée.

Dans le cas où le monofilament élémentaire métallique présente une section circulaire, le diamètre de ces monofilaments élémentaires métalliques va préférentiellement de 0,05 mm à 0,50 mm.

Un élément filaire métallique peut être un assemblage de plusieurs monofilaments élémentaires métalliques tels que décrits ci-dessus, assemblés ensemble en hélice, par exemple par câblage ou retordage des monofilaments élémentaires métalliques pour former, par exemple des câbles à couches comprenant plusieurs couches concentriques de monofilaments élémentaires métalliques ou des câbles à torons, chaque toron comprenant plusieurs couches concentriques de monofilaments élémentaires métalliques. De façon optionnelle et comme décrit dans WO2005071157, un tel élément filaire métallique comprend une couche à base d'une composition polymérique, de préférence d'une composition comprenant un élastomère, cette couche étant disposée entre deux couches de monofilaments élémentaires métalliques du câble à couche ou d'un toron du câble à torons.

Un élément filaire textile peut être un monofilament élémentaire textile éventuellement revêtu d'une ou plusieurs couches d'un revêtement à base d'une composition adhésive non métallique. Ce monofilament élémentaire textile est obtenu, par exemple, par filage au fondu, filage en solution ou filage de gel. Chaque monofilament élémentaire textile est réalisé dans un matériau organique, notamment polymérique, ou inorganique, comme par exemple le verre ou le carbone. Les matériaux polymériques peuvent être du type thermoplastique, comme par exemple les polyamides aliphatiques, notamment les polyamides 6-6, et les polyesters, notamment le polyéthylène téréphthalate. Les matériaux polymériques peuvent être du type non thermoplastique, comme par exemple les polyamides aromatiques, notamment l'aramide, et la cellulose, naturelle comme artificielle, notamment la rayonne. Chaque monofilament élémentaire textile présente une section sensiblement circulaire présentant un diamètre allant par exemple de 2 µm à 100 µm.

Un élément filaire textile peut être un assemblage de plusieurs monofilaments élémentaires textiles tels que définis ci-dessus, également appelé brin. Un brin comprend de préférence plus de 10 monofilaments élémentaires textiles, de préférence plus de 100 monofilaments élémentaires textiles et plus préférentiellement plus de 500 monofilaments élémentaires textiles.

Un élément filaire textile peut également être un assemblage de plusieurs brins tels que définis ci-dessus. Dans une variante, les matériaux dans lesquels sont réalisés les monofilaments élémentaires textiles de chaque brin sont identiques. Dans une autre variante, les matériaux dans lesquels sont réalisés les monofilaments élémentaires textiles de chaque brin sont différents, l'élément filaire textile étant alors communément appelé élément filaire textile hybride.

Que ce soit dans le cas d'un élément filaire métallique ou textile, la couche à base d'une composition adhésive non métallique est, dans un mode de réalisation, formée par une couche d'un primaire d'adhésion permettant d'améliorer l'adhésion de l'élément filaire, par exemple à une matrice élastomérique. De tels primaires d'adhésion sont ceux couramment utilisés par l'homme du métier pour le pré-encollage de certaines fibres textiles (notamment fibres en polyester, par exemple PET, en aramide, en aramide/nylon). Par exemple, on pourra utiliser un primaire à base d'époxy, notamment à base de polyglycérol polyglycidyl éther. On pourra également utiliser un primaire à base d'isocyanate bloqué.

Que ce soit dans le cas d'un élément filaire métallique ou textile, la couche à base d'une composition adhésive non métallique est, dans un autre mode de réalisation, formée par une couche à base d'une résine et d'un latex d'élastomère(s). On citera les compositions adhésives de type RFL (Résorcinol - Formaldéhyde - Latex) mais également les compositions adhésives telles que décrites dans WO2015118041.

Que ce soit dans le cas d'un élément filaire métallique ou textile, dans encore un autre mode de réalisation, on pourra avoir une couche d'un primaire d'adhésion revêtant l'élément filaire, cette couche de primaire d'adhésion étant elle-même revêtue d'une couche à base d'une résine et d'un latex d'élastomère(s).

### COMPOSITE RENFORCÉ PAR UN PRODUIT RENFORCÉ OBTENU PAR LE PROCÉDÉ SELON L'INVENTION

Un composite d'élastomère renforcé d'au moins un produit renforcé par au moins un élément de renfort tel que défini précédemment est également décrit. La matrice d'élastomère est à base d'une composition d'élastomère comprenant au moins un élastomère et un autre constituant.

Ce composite d'élastomère peut être préparé selon un procédé comportant au moins les étapes suivantes :
- au cours d'une première étape, combiner au moins un produit renforcé avec une composition d'élastomère pour former un composite d'élastomère renforcé du produit renforcé;
- puis, au cours d'une deuxième étape, réticuler par cuisson, par exemple par vulcanisation, de préférence sous pression, le composite ainsi formé.

De préférence, la composition d'élastomère comprend un élastomère diénique. Par élastomère ou caoutchouc (les deux termes étant synonymes) du type "diénique", on entend de manière générale un élastomère issu au moins en partie (i.e. un homopolymère ou un copolymère) de monomères diènes (monomères porteurs de deux doubles liaisons carbone-carbone, conjuguées ou non).

Les compositions d'élastomère peuvent contenir un seul élastomère diénique ou un mélange de plusieurs élastomères diéniques, le ou les élastomères diéniques pouvant être utilisés en association avec tout type d'élastomère synthétique autre que diénique, voire avec des polymères autres que des élastomères, par exemple des polymères thermoplastiques.

Dans un premier mode de réalisation préférentiellement destiné à une utilisation pneumatique, la composition d'élastomère comprend un élastomère diénique choisi dans le groupe constitué par les polybutadiènes (BR), le caoutchouc naturel (NR), les polyisoprènes de synthèse (IR), les différents copolymères de butadiène, les différents copolymères d'isoprène, et les mélanges de ces élastomères.

De tels copolymères sont plus préférentiellement choisis dans le groupe constitué par les copolymères de butadiène-styrène (SBR), que ces derniers soient préparés par polymérisation en émulsion (ESBR) comme en solution (SSBR), les copolymères d'isoprène-butadiène (BIR), les copolymères d'isoprène-styrène (SIR) et les copolymères d'isoprène-butadiène-styrène (SBIR).

Avantageusement, l'élastomère de type éthylène alpha oléfine est choisi dans le groupe constitué par les copolymères d'éthylène-propylène (EPM), les copolymères d'éthylène-propylène-diène (EPDM) et les mélanges de ces copolymères.

De préférence, la composition d'élastomère comprend une charge renforçante.

Lorsqu'une charge renforçante est utilisée, on peut utiliser tout type de charge renforçante connue pour ses capacités à renforcer une composition d'élastomère utilisable pour la fabrication de pneumatiques, par exemple une charge organique telle que du noir de carbone, une charge inorganique renforçante telle que de la silice, ou encore un coupage de ces deux types de charge, notamment un coupage de noir de carbone et de silice.

Comme noirs de carbone conviennent tous les noirs de carbone conventionnellement utilisés dans les pneumatiques (noirs dits de grade pneumatique). Par exemple, on citera plus particulièrement les noirs de carbone renforçants des séries 100, 200 ou 300 (grades ASTM).

Dans le cas d'une utilisation de noirs de carbone avec un élastomère isoprénique, les noirs de carbone pourraient être par exemple déjà incorporés à l'élastomère isoprénique sous la forme d'un masterbatch (voir par exemple demandes WO 97/36724 ou WO 99/16600).

Comme exemples de charges organiques autres que des noirs de carbone, on peut citer les charges organiques de polyvinylaromatique fonctionnalisé telles que décrites dans les demandes WO-A-2006/069792 et WO-A-2006/069793.

Par "charge inorganique renforçante", doit être entendu dans la présente demande, par définition, toute charge inorganique ou minérale (quelles que soient sa couleur et son origine (naturelle ou de synthèse), encore appelée charge "blanche", charge "claire" voire "charge non noire" ("non-black filler") par opposition au noir de carbone, capable de renforcer à elle seule, sans autre moyen qu'un agent de couplage intermédiaire, une composition d'élastomère, en d'autres termes apte à remplacer, dans sa fonction de renforcement, un noir de carbone conventionnel de grade pneumatique. Une telle charge se caractérise généralement, de manière connue, par la présence de groupes hydroxyle (-OH) à sa surface.

L'état physique sous lequel se présente la charge inorganique renforçante est indifférent, que ce soit sous forme de poudre, de micro-perles, de granules, de billes ou toute autre forme densifiée appropriée. Bien entendu on entend également par charge inorganique renforçante des mélanges de différentes charges inorganiques renforçantes, en particulier de charges siliceuses et/ou alumineuses hautement dispersibles telles que décrites ci-après.

Comme charges inorganiques renforçantes conviennent notamment des charges minérales du type siliceuses, en particulier de la silice (SiO2), ou du type alumineuses, en particulier de l'alumine (Al2O3). La silice utilisée peut être toute silice renforçante connue de l'homme du métier, notamment toute silice précipitée ou pyrogenée présentant une surface BET ainsi qu'une surface spécifique CTAB toutes deux inferieures à 450 m2/g, de préférence de 30 à 400 m2/g. A titres de silices précipitées hautement dispersibles (dites "HDS"), on citera par exemple les silices "Ultrasil" 7000 et "Ultrasil" 7005 de la société Evonik, les silices "Zeosil" 1165MP, 1135MP et 1115MP de la société Rhodia, la silice "Hi-Sil" EZ150G de la société PPG, les silices "Zeopol" 8715, 8745 et 8755 de la Société Huber, les silices à haute surface spécifique telles que décrites dans la demande WO 03/16837.

Enfin, l'homme du métier comprendra qu'à titre de charge équivalente de la charge inorganique renforçante décrite dans le présent paragraphe, pourrait être utilisée une charge renforçante d'une autre nature, notamment organique, dès lors que cette charge renforçante serait recouverte d'une couche inorganique telle que de la silice, ou bien comporterait à sa surface des sites fonctionnels, notamment hydroxyle, nécessitant l'utilisation d'un agent de couplage pour établir la liaison entre la charge et l'élastomère.

De préférence, le taux de charge renforçante totale (noir de carbone et/ou charge inorganique renforçante telle que silice) est compris dans un domaine de 5 à 120 pce, plus préférentiellement de 5 à 100 pce et encore plus préférentiellement de 5 à 90 pce.

Le noir de carbone peut avantageusement constituer la seule charge renforçante ou la charge renforçante majoritaire. Bien entendu on peut utiliser un seul noir de carbone ou un coupage de plusieurs noirs de carbone de grades ASTM différents. Le noir de carbone peut être également utilisé en coupage avec d'autres charges renforçantes et en particulier des charges inorganiques renforçantes telles que décrites précédemment, et en particulier de la silice.

Lorsqu'une charge inorganique (par exemple de la silice) est utilisée dans la composition de caoutchouc, seule ou en coupage avec du noir de carbone, son taux est compris dans un domaine de 0 à 70 pce, préférentiellement de 0 à 50 pce, en particulier également de 5 à 70 pce, et encore plus préférentiellement cette proportion varie de 5 à 50 pce, particulièrement de 5 à 40 pce.

De préférence, la composition d'élastomère comprend des additifs divers.

Les compositions de caoutchouc peuvent comporter également tout ou partie des additifs usuels habituellement utilisés dans les compositions d'élastomères destinées à la fabrication de pneumatiques, comme par exemple des plastifiants ou des huiles d'extension, que ces derniers soient de nature aromatique ou non-aromatique, des pigments, des agents de protection tels que cires anti-ozone, anti-ozonants chimiques, anti-oxydants, des agents anti-fatigue ou bien encore des promoteurs d'adhésion.

De préférence, la composition d'élastomère comprend un système de réticulation, plus préférentiellement de vulcanisation.

Dans le mode de réalisation préférentiellement destiné à une utilisation pneumatique, la composition d'élastomère comprend un système de vulcanisation.

Le système de vulcanisation, comprend un agent donneur de soufre, par exemple du soufre.

De préférence, le système de vulcanisation comprend des activateurs de vulcanisation tels que l'oxyde de zinc et l'acide stéarique.

De préférence, le système de vulcanisation comprend un accélérateur de vulcanisation et/ou un retardateur de vulcanisation.

Avantageusement, le composite est tel que la matrice d'élastomère est à base d'une composition d'élastomère comprenant un système de réticulation comprenant un taux de soufre moléculaire allant de 1 à 10 pce. Par soufre moléculaire, on entend du soufre issu d'un composé Sn avec n>2.

Le taux de soufre est mesuré par analyse élémentaire, à l'aide du micro-analyseur Thermo Scientific Flash 2000. L'analyse comprend une étape de combustion de l'échantillon puis une étape de séparation des composés formés. Environ 1 mg d'échantillon est introduit dans le micro-analyseur, où il subit une combustion flash de 1000°C sous oxygène. Les gaz formés sont alors oxydés grâce à l'oxygène en excès et à un catalyseur d'anhydride tungstique. Une étape de réduction par passage sur du cuivre permet ensuite de piéger l'oxygène en excès, et de réduire les oxydes d'azote en N₂ ainsi que les sulfites en dioxyde de soufre SO₂. L'eau est piégée et les composés N₂, CO₂, SO₂ formés sont ensuite séparés sur une colonne chromatographique puis détectés par un catharomètre. La quantification du soufre total est réalisée par mesure de l'aire du pic de SO2, après calibration avec des standards.

L'ensemble des accélérateurs, retardateurs et activateurs de vulcanisation est utilisé à un taux préférentiel compris dans un domaine de 0,5 à 15 pce. Le ou les activateurs de vulcanisation est ou sont utilisés à un taux préférentiel compris dans un domaine de 0,5 et 12 pce.

Le système de réticulation proprement dit est préférentiellement à base de soufre et d'un accélérateur primaire de vulcanisation, en particulier d'un accélérateur du type sulfénamide. A ce système de vulcanisation viennent s'ajouter, divers accélérateurs secondaires ou activateurs de vulcanisation connus tels qu'oxyde de zinc, acide stéarique, dérivés guanidiques (en particulier diphenylguanidine), etc.

On peut utiliser comme accélérateur (primaire ou secondaire) tout composé susceptible d'agir comme accélérateur de vulcanisation des élastomères diéniques en présence de soufre, notamment des accélérateurs du type thiazole ainsi que leurs dérivés, des accélérateurs de type thiurame, et de type dithiocarbamate de zinc. Ces accélérateurs sont plus préférentiellement choisis dans le groupe constitué par le disulfure de 2-mercaptobenzothiazyle (en abrégé "MBTS"), N-cyclohexyl-2-benzothiazyle sulfénamide (en abrégé "CBS"), N,N-dicyclohexyl- 2-benzothiazyle sulfénamide (en abrégé "DCBS"), N-ter-butyl-2-benzothiazyle sulfénamide (en abrégé "TBBS"), N-ter-butyl-2-benzothiazyle sulfénimide (en abrégé "TBSI"), dibenzyldithiocarbamate de zinc (en abrégé "ZBEC") et les mélanges de ces composés. De préférence, on utilise un accélérateur primaire du type sulfénamide.

### PNEUMATIQUE

Un pneumatique est également décrit. Le produit renforcé de l'invention ou le composite d'élastomère décrit ci-dessus sont avantageusement utilisables pour le renforcement de pneumatiques de tous types de véhicules, en particulier véhicules tourisme ou véhicules industriels tels que Poids-lourd.

L'invention sera mieux comprise à la lecture de la description qui va suivre, donnée uniquement à titre d'exemple non limitatif et faite en se référant aux dessins dans lesquels:
- la figure 1 est un schéma d'un pneumatique;
- la figure 2 est une vue en coupe d'un composite formant une nappe de travail du pneumatique de la figure 1 ; et
- la figure 3 est un diagramme illustrant les différentes étapes d'un procédé de fabrication d'un produit renforcé selon l'invention.

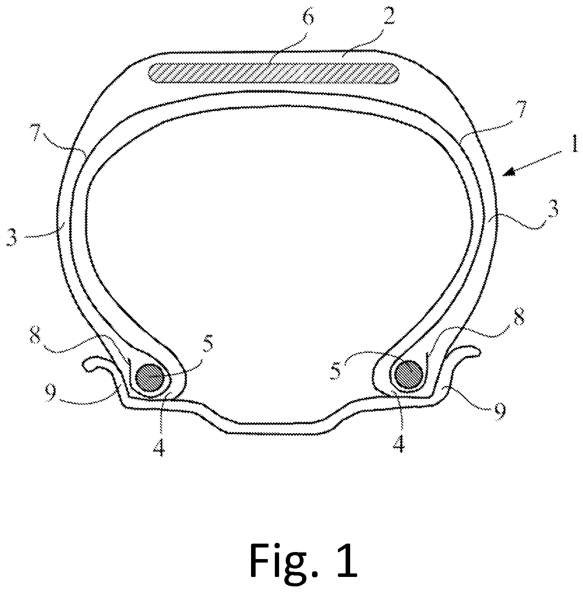

La figure 1 annexée représente de manière très schématique (sans respect d'une échelle spécifique), une coupe radiale d'un pneumatique pour véhicule du type tourisme.

Ce pneumatique 1 comporte un sommet 2 renforcé par une armature de sommet ou ceinture 6, deux flancs 3 et deux bourrelets 4, chacun de ces bourrelets 4 étant renforcé avec une tringle 5. Le sommet 2 est surmonté d'une bande de roulement non représentée sur cette figure schématique. Une armature de carcasse 7 est enroulée autour des deux tringles 5 dans chaque bourrelet 4, le retournement 8 de cette armature 7 étant par exemple disposé vers l'extérieur du pneumatique 1 qui est ici représenté monté sur sa jante 9. L'armature de carcasse 7 est de manière connue en soi constituée d'au moins une nappe renforcée par des câbles dits "radiaux", par exemple textiles, c'est-à-dire que ces câbles sont disposés pratiquement parallèles les uns aux autres et s'étendent d'un bourrelet à l'autre de manière à former un angle compris entre 80° et 90° avec le plan circonférentiel médian (plan perpendiculaire à l'axe de rotation du pneumatique qui est situé à mi-distance des deux bourrelets 4 et passe par le milieu de l'armature de sommet 6).

Ce pneumatique 1 de l'invention a par exemple pour caractéristique essentielle qu'au moins une armature de sommet 6 comporte un élément conducteur, ici un élément filaire conducteur revêtu ou un composite d'élastomère selon l'invention. Selon un autre exemple de mode de réalisation, ce sont par exemple les tringles qui pourraient être constituées, en tout ou partie, d'un élément conducteur, ici un élément filaire conducteur revêtu.

Bien entendu, l'invention concerne les objets précédemment décrits, à savoir le composite d'élastomère tel que le pneumatique le comportant, tant à l'état cru (avant réticulation) qu'à l'état cuit (après réticulation).

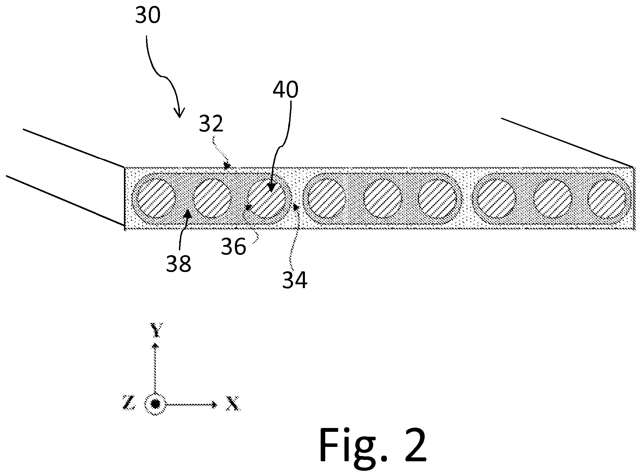

On a représenté sur la figure 2 une vue en coupe d'un composite, désignée par la référence générale 30 formant une nappe de travail du pneumatique de la figure 1. Le composite 30 comprend au moins un produit renforcé 34 par des éléments de renfort 36, en l'espèce des monofilaments métalliques, noyés dans la matrice élastomérique 32.

Sur la figure 2, on a représenté la matrice élastomérique 32, le produit renforcé 34 et les éléments de renfort 36 dans un repère X, Y, Z dans lequel la direction Y est la direction radiale Y et les directions X et Z sont les directions axiale et circonférentielle. Sur la figure 2, le composite 30 comprend trois produits renforcés 34 agencés côte à côte selon la direction principale X. Chaque produit renforcé 34 comprend une matrice 38 à base des composés décrits précédemment et trois éléments filaires de renfort 36 agencés côte à côte selon la direction principale X et s'étendant parallèlement les uns aux autres au sein du produit renforcé 34 et noyés collectivement dans la matrice 38. Chaque élément filaire de renfort 36 comprend, ici est constitué par, un monofilament métallique 40. En variante, chaque élément filaire de renfort 36 pourrait être un assemblage de plusieurs monofilaments métalliques.

Dans une autre variante, chaque produit renforcé 34 comprend un unique élément filaire de renfort 36 noyé individuellement dans la matrice 38. Plusieurs produits renforcés 34 conformes à cette autre variante sont alors noyés dans la matrice élastomérique 32. L'élément filaire de renfort 36 peut être un monofilaments métallique ou un assemblage de plusieurs monofilaments métalliques.

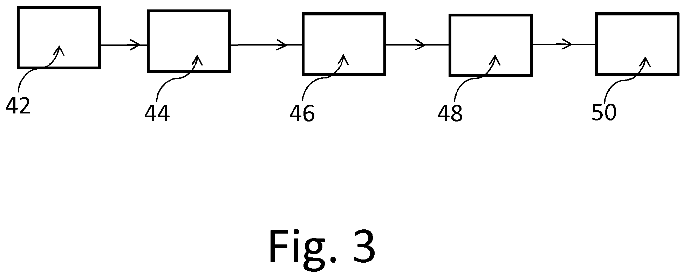

Nous allons maintenant décrire un exemple de procédé de fabrication d'un produit renforcé 34 en référence à la figure 3.

Dans un premier mode de réalisation, la composition comprend un composé A1 et un composé A2.

Lors du procédé, on mélange dans une étape 42 les constituants de la composition. Pour ce faire, on mélange 30,43 g d'un composé A1 avec 19,07 g d'un composé A2 à une température Tm. Dans l'exemple décrit, le composé A1 est le 1,2-benzènedicarboxaldéhyde dont la température de fusion est de 57°C à pression atmosphérique et le composé A2 est le phloroglucinol dont la température de fusion est de 218°C à pression atmosphérique. On effectue le mélange à une température de 60°C sous pression atmosphérique.

Lors d'une étape 44, on ajoute des additifs qui peuvent être des charges ou des agents desséchants. Ici, on rajoute 0,25 g de sulfate de magnésium et 0,25 g de noir de carbone N326.

On noie ensuite lors d'une étape 46 les éléments de renfort 36 dans la composition.

Puis, lors d'une étape 48, on réticule la résine à base du 1,2-benzènedicarboxaldéhyde et du phloroglucinol en chauffant à au moins 110°C sous pression atmosphérique et ici 110°C à pression atmosphérique.

On effectue enfin une étape 50 de réticulation finale de la résine par chauffage à une température de 180°C à 1,03 bar.

Dans le mode de réalisation décrit ici, on obtient le produit renforcé 36 qui sera ensuite noyé dans une composition d'élastomérique pour former le composite d'élastomère 30 tel que décrit précédemment qui sera utilisé dans le pneumatique.

Dans une autre mode de réalisation de l'invention non décrit ici, on obtient le produit renforcé 36 qui sera utilisé directement dans le pneumatique.

L'invention ne se limite pas aux modes de réalisation décrits ci-dessus.

Des exemples de compositions mettant en œuvre ou non le procédé selon le premier mode de réalisation de l'invention sont rassemblés dans le tableau 1 ci-dessous.

Dans l'exemple T1 utilisant du 1,4-benzènedicarboxaldéhyde et du phloroglucinol, on chauffe le mélange à une température de 120°C à pression atmosphérique afin de faire fondre le composé de plus basse température de fusion, ici le 1,4-benzènedicarboxaldéhyde (dont la température de fusion est égale à 115°C à pression atmosphérique). Cette température de 120°C est supérieure ou égale, ici égale, à la température de réticulation de la résine à base de 1,4-benzènedicarboxaldéhyde et du phloroglucinol. On observe alors une réticulation précoce de la résine qui empêche la manipulation ultérieure de la composition, notamment pour toute étape durant laquelle on noierait des éléments de renfort dans la composition. On observe également une réticulation précoce de la résine de l'exemple T2 pour les mêmes raisons.

Dans les autres procédés selon l'invention mettant en œuvre les compositions E1 à E5, la température de mise en solution liquide est ajustée au juste nécessaire permettant ainsi de solubiliser le composé A2 dans le composé A1 sans pour autant que l'étape de réticulation de la résine ne commence, c'est-à-dire que la composition reste liquide pendant un temps d'ouverture suffisant pour ainsi pouvoir noyer le ou les élément(s) de renfort dans la matrice à base de cette composition et ainsi former un produit renforcé selon l'invention.

Dans l'exemple de procédé mettant en œuvre la composition E1 conforme au premier mode de réalisation de l'invention, les températures vérifient, à pression atmosphérique, les conditions suivantes : T1= 57°C ≤ Tm= 60°C ≤ Tn = 110°C et T2 = 218°C ≥ Tn = 110°C avec T1 < T2, 10°C ≤ Tn-Tm= 50°C ≤ 60°C, et Tp= 180°C > Tn =110°C avec Tn ≤ 120°C et Tm ≤ 80°C.

D'autres exemples de compositions mise en œuvre dans de procédés conformes au deuxième mode de réalisation (composition F1 à F4) et au troisième mode de réalisation (F5) de l'invention sont rassemblés dans les tableaux 2 et 3 ci-dessous.

Dans les procédés selon le deuxième mode de réalisation de l'invention mettant en œuvre les compositions F1 à F4, la température de mise en solution liquide est ajustée au juste nécessaire permettant ainsi de solubiliser deux des composés A3, A4, A5 dans celui des composés A3, A4, A5 présentant la température de fusion la plus basse sans pour autant que l'étape de réticulation de la résine ne commence.

Dans l'exemple de procédé mettant en œuvre la composition F1 conforme au deuxième mode de réalisation de l'invention, les températures vérifient, à pression atmosphérique, les conditions suivantes : Tmin= 57°C ≤ Tm= 60°C ≤ Tn = 110°C et Tint = 115°C et Tmax = 218°C sont supérieures ou égales à Tn = 110°C, 10°C ≤ Tn-Tm= 50°C ≤60°C, et Tp= 180°C> Tn = 110°C, avec Tn ≤ 120°C et Tm ≤ 80°C.

Ainsi, il est possible de mettre en œuvre le deuxième mode de réalisation du procédé de l'invention pour la composition comprenant du 1,4-benzènedicarboxaldéhyde et du phloroglucinol (exemple T1 précédent) en ajoutant du 1,2-benzènedicarboxaldéhyde (exemple de composition F1 selon l'invention). On maîtrise ainsi la réactivité de la résine en contrôlant la température de solubilisation des différents constituants et notamment celle du 1,4-benzènedicarboxaldéhyde.

Dans le procédé selon le troisième mode de réalisation de l'invention mettant en œuvre la composition F5, on constate que c'est bien le composé qui a la température de fusion la plus basse qui va piloter la température de solubilisation.

Dans l'exemple de procédé mettant en œuvre la composition F5 conforme à l'invention, les températures vérifient, à pression atmosphérique, les conditions suivantes : Tmin= 88°C ≤ Tm= 100°C ≤ Tn = 110°C et Tint1 = 115°C, Tint2 = 175°C et Tmax = 218°C sont supérieures ou égales à Tn = 110°C, 10°C ≤ Tn-Tm= 10°C ≤ 60°C, et Tp= 180°C> Tn =110°C avec Tn ≤ 120°C et Tm ≤ 100°C.

Dans cette composition F5, un seul composé a une température de fusion inférieure à 100°C à pression atmosphérique et les trois autres ont une température de fusion à pression atmosphérique largement au-dessus de 110°C. Ainsi, on maîtrise la réactivité de la résine en contrôlant la température de solubilisation des différents constituants par celui qui a la température de fusion la plus basse.

On pourra également combiner les caractéristiques des différents modes de réalisation décrits ou envisagés ci-dessus sous réserve que celles-ci soient compatibles entre elles.

**Tableau 1**

| Compositions | T1 | T2 | E1 | E2 | E3 | E4 | E5 |
|---|---|---|---|---|---|---|---|
| A1 | 1,4-benzènedicarbo xaldéhyde (3) | 1,4-benzènedicarbo xaldéhyde (3) | 1,2-benzènedicarbo xaldéhyde (1) | 1,3-benzènedicarbo xaldéhyde (2) | 1,2-benzènedicarbo xaldéhyde (1) | 1,3-benzènedicarbo xaldéhyde (2) | 5-(hydroxyméthyl) -furfural (4) |
| T1 | 115°C | 115°C | 57°C | 88°C | 57°C | 88°C | 31°C |
| A2 | phloroglucinol(5 ) | Résorcinol sulfide (6) | phloroglucinol(5 ) | phloroglucinol(5 ) | Résorcinol sulfide (6) | Résorcinol sulfide (6) | phloroglucinol(5 ) |
| T2 | 218°C | 175°C | 218°C | 218°C | 175°C | 175°C | 218°C |
| T2-T1 | 103°C | 60°C | 161°C | 130°C | 118°C | 87°C | 187°C |

| Températures des étapes du procédé | | | | | | | |
|---|---|---|---|---|---|---|---|
| Tm | 120°C | 120°C | 60°C | 90°C | 60°C | 90°C | 60°C |
| Tm-T1 | 5°C | 5°C | 3°C | 2°C | 3°C | 2°C | 29°C |
| Tn | 120°C | 120°C | 110°C | 110°C | 110°C | 110°C | 110°C |
| Tn-Tm | 0°C | 0°C | 50°C | 20°C | 50°C | 20°C | 50°C |
| Tp | 180°C | 180°C | 180°C | 180°C | 180°C | 180°C | 180°C |
| Procédé conforme à l'invention | non | non | Oui 1^{er} mode | Oui 1^{er} mode | Oui 1^{er} mode | Oui 1^{er} mode | Oui 1^{er} mode |

| | | | | | | | |
|---|---|---|---|---|---|---|---|
| (1) 1,2-benzènedicarboxaldéhyde (de la société Sigma Aldrich ; de pureté 99%) ; (2) 1,3-benzènedicarboxaldéhyde (de la société Sigma Aldrich ; de pureté 99%) ; (3) 1,4-benzènedicarboxaldéhyde (de la société Sigma Aldrich ; de pureté 99%) ; (4) 5-(hydroxyméthyl)-furfural (de la société Aldrich ; de pureté 99%) ; (5) Phloroglucinol (de la société Sigma Aldrich ; de pureté 99%) ; (6) Résorcinol sulfide (de la société Sigma Aldrich ; de pureté 99%). | | | | | | | |

**Tableau 2**

| Compositions | F1 | F2 | F3 | F4 | F5 |
|---|---|---|---|---|---|
| A3 | 1,2-benzènedicarboxaldéhy de (1) | 1,3-benzènedicarboxaldéh yde (2) | 1,2-benzènedicarboxaldéh yde (1) | 1,3-benzènedicarboxaldéh yde (2) | 1,3-benzènedicarboxaldéh yde (2) |
| A4 | 1,4-benzènedicarboxaldéhy de (3) | 1,4-benzènedicarboxaldéh yde (3) | 1,4-benzènedicarboxaldéh yde (3) | 1,4-benzènedicarboxaldéh yde (3) | 1,4-benzènedicarboxaldéh yde (3) |
| T3 | 57°C | 88°C | 57°C | 88°C | 88°C |
| T4 | 115°C | 115°C | 115°C | 115°C | 115°C |
| A5 | Phloroglucinol (5) | Phloroglucinol (5) | Résorcinol sulfide (6) | Résorcinol sulfide (6) | Phloroglucinol (5) |
| A6 | - | - | - | - | Résorcinol sulfide (6) |
| T5 | 218°C | 218°C | 175°C | 175°C | 218°C |
| T6 | - | - | - | - | 175°C |
| Tmin | 57°C | 88°C | 57°C | 88°C | 88°C |
| Tmax | 218°C | 218°C | 175°C | 175°C | 218°C |
| Tint | 115°C | 115°C | 115°C | 115°C | - |
| Tint1 | - | - | - | - | 115°C |
| Tint2 | - | - | - | - | 175°C |
| Tmax - Tmin | 161°C | 130°C | 118°C | 87°C | 130°C |

**Tableau 3**

| Compositions | F1 | F2 | F3 | F4 | F5 |
|---|---|---|---|---|---|
| Températures des étapes du procédé | | | | | |
| Tm | 60°C | 90°C | 60°C | 90°C | 100°C |
| Tm - Tmin | 3°C | 2°C | 3°C | 2°C | 12°C |
| Tn | 110°C | 120°C | 110°C | 120°C | 110°C |
| Tn-Tm | 50°C | 30°C | 50°C | 30°C | 10°C |
| Tp | 180°C | 180°C | 180°C | 180°C | 180°C |
| Procédé conforme à l'invention | Oui 2^{ème} mode | Oui 2^{ème} mode | Oui 2^{ème} mode | Oui 2^{ème} mode | Oui 3^{ème} mode |

## Revendications

1. Procédé de fabrication d'un produit renforcé (34) comprenant une matrice (38) à base d'une composition et au moins un élément de renfort (36), le ou les éléments de renfort étant noyés dans la matrice (38), **caractérisé en ce que** :
• on réalise une étape de fabrication de la composition comprenant un mélange comprenant:
- au moins un composé A1 présentant une température de fusion T1, et
- au moins un composé A2 présentant une température de fusion T2,
en mélangeant au moins le composé A1 et au moins le composé A2 à une température Tm telle que :
- T1 ≤ Tm < T2 de façon à solubiliser A2 dans A1 et obtenir la composition à l'état liquide, la composition étant dépourvue de tout solvant organique ou d'eau ;
• puis, on noie le ou les élément(s) de renfort (36) dans la composition à l'état liquide,
puis, le composé A1 réagissant avec le composé A2 pour former la résine par chauffage à partir d'une température Tn, on réalise une étape de réticulation d'une résine à base d'au moins le composé A1 et d'au moins le composé A2 par chauffage de la composition à au moins la température Tn telle que T1 ≤ Tm <Tn de façon à former la matrice (38) dans laquelle est/sont noyé(s) le ou les élément(s) de renfort (36) défini comme un élément tridimensionnel permettant le renforcement mécanique d'une matrice dans laquelle cet élément de renfort tridimensionnel est destiné à être noyé ;
dans lequel au moins un des composés A1, A2 est choisi parmi
• un composé A11 comprenant au moins deux fonctions, l'une de ces fonctions étant une fonction hydroxyméthyle, l'autre étant une fonction aldéhyde ou une fonction hydroxyméthyle, ou
• un composé A12 choisi dans le groupe constitué par le 1,2-benzène-dicarboxaldéhyde, le 1,3-benzène-dicarboxaldéhyde, le 1,4-benzène-dicarboxaldéhyde, le 2-hydroxybenzène-1,3,5-tricarbaldéhyde et les mélanges de ces composés, ou
• un mélange d'un composé A11 et d'un composé A12.

2. Procédé de fabrication d'un produit renforcé (34) comprenant une matrice (38) à base d'une composition et au moins un élément de renfort (36), le ou les éléments de renfort étant noyés dans la matrice (38), **caractérisé en ce que** :
• on réalise une étape de fabrication de la composition comprenant un mélange comprenant:
- au moins un composé A3 présentant une température de fusion T3,
- au moins un composé A4 présentant une température de fusion T4, et
- au moins un composé A5 présentant une température de fusion T5,
en mélangeant au moins les composés A3, A4 et A5 à une température Tm telle que Tmin ≤ Tm < Tmax dans laquelle :
- Tmin est la température la plus basse parmi T3, T4 et T5,
- Tmax est la température la plus haute parmi T3, T4 et T5, et
- Tint est la température parmi T3, T4 et T5 telle que Tmin ≤ Tint ≤ Tmax,
de façon à solubiliser au moins un ou deux des composés A3, A5, A4 respectivement dans au moins deux autres ou un autre des composés A3, A5, A4 et obtenir la composition à l'état liquide, la composition étant dépourvue de tout solvant organique ou d'eau ;
• puis, on noie le ou les élément(s) de renfort (36) dans la composition à l'état liquide,
puis, les composés A3, A4 et A5 réagissant ensemble pour former la résine par chauffage à partir d'une température Tn, on réalise une étape de réticulation d'une résine à base d'au moins les composés A3, A4 et A5 par chauffage de la composition à au moins la température Tn telle que Tmin ≤ Tm <Tn de façon à former la matrice (38) dans laquelle est/sont noyé(s)le ou les élément(s) de renfort (36) défini comme un élément tridimensionnel permettant le renforcement mécanique d'une matrice dans laquelle cet élément de renfort tridimensionnel est destiné à être noyé ;
dans lequel dans lequel au moins un des composés A3, A4, A5 est choisi parmi :
• un composé A11 comprenant au moins deux fonctions, l'une de ces fonctions étant une fonction hydroxyméthyle, l'autre étant une fonction aldéhyde ou une fonction hydroxyméthyle, ou
• un composé A12 comprenant au moins une fonction aldéhyde, ou
• un mélange d'un composé A11 et d'un composé A12.

3. Procédé de fabrication d'un produit renforcé (34) comprenant une matrice (38) à base d'une composition et au moins un élément de renfort (36), le ou les éléments de renfort étant noyés dans la matrice (38), **caractérisé en ce que** :
• on réalise une étape de fabrication de la composition comprenant un mélange comprenant:
- au moins un composé A3 présentant une température de fusion T3,
- au moins un composé A4 présentant une température de fusion T4,
- au moins un composé A5 présentant une température de fusion T5,
- au moins un composé A6 présentant une température de fusion T6,
en mélangeant au moins les composés A3, A4, A5 et A6 à une température Tm telle que Tmin ≤ Tm < Tmax dans laquelle :
- Tmin est la température la plus basse parmi T3, T4, T5 et T6, et
- Tmax est la température la plus haute parmi T3, T4, T5 et T6 ;
- Tint1 est la température parmi T3, T4, T5 et T6, et
- Tint2 est la température parmi T3, T4, T5 et T6 telles que : Tmin ≤ Tint1 ≤ Tint2 ≤ Tmax,
de façon à solubiliser un, deux ou trois des composés A3, A4, A5, A6 dans respectivement trois, deux ou un autre des composés A3, A4, A5, A6 et obtenir la composition à l'état liquide la composition étant dépourvue de tout solvant organique ou d'eau;
• puis, on noie le ou les élément(s) de renfort (36) dans la composition à l'état liquide,
puis, les composés A3, A4, A5 et A6 réagissant ensemble pour former la résine par chauffage à partir d'une température Tn, on réalise une étape de réticulation d'une résine à base d'au moins les composés A3, A4, A5 et A6 par chauffage de la composition à au moins la température Tn telle que Tmin ≤ Tm < Tn de façon à former la matrice (38) dans laquelle est/sont noyé(s)le ou les élément(s) de renfort (36) défini comme un élément tridimensionnel permettant le renforcement mécanique d'une matrice dans laquelle cet élément de renfort tridimensionnel est destiné à être noyé ;
dans lequel dans lequel au moins un des composés A3, A4, A5 , A6 est choisi parmi :
• un composé A11 comprenant au moins deux fonctions, l'une de ces fonctions étant une fonction hydroxyméthyle, l'autre étant une fonction aldéhyde ou une fonction hydroxyméthyle, ou
• un composé A12 comprenant au moins une fonction aldéhyde, ou
• un mélange d'un composé A11 et d'un composé A12.

4. Procédé selon l'une quelconque des revendications précédentes, dans lequel Tn-Tm ≥ 5°C et plus préférentiellement Tn-Tm ≥ 10°C.

5. Procédé selon l'une quelconque des revendications précédentes, dans lequel Tn-Tm ≤ 100°C et plus préférentiellement Tn-Tm ≤ 60°C.

6. Procédé selon l'une quelconque des revendications précédentes, dans lequel, postérieurement à l'étape de réticulation de la résine, on réalise une étape de réticulation finale de la résine par chauffage à une température Tp avec Tn < Tp.

7. Procédé selon la revendication précédente, dans lequel la température Tp ≤ 200°C.

8. Procédé selon l'une quelconque des revendications 2 à 7, dans lequel le composé A12 est choisi dans le groupe constitué par le 1,2-benzène-dicarboxaldéhyde, le 1,3-benzène-dicarboxaldéhyde, le 1,4-benzène-dicarboxaldéhyde, le 2-hydroxybenzène-1,3,5-tricarbaldéhyde et les mélanges de ces composés.

9. Procédé selon l'une quelconque des revendications 2 à 7, dans lequel le composé A12 est choisi dans le groupe constitué par le furfuraldéhyde, le 2,5-furanedicarboxaldéhyde et les mélanges de ces composés.

10. Procédé selon l'une quelconque des revendications précédentes, dans lequel le composé A11 répond à la formule générale (II) : 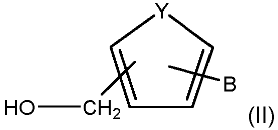 où B représente CHO ou CH₂OH, Y représente O, NR₁, NO, S, SO, SO₂, SR₂R₃, R₁ représente un hydrogène, un groupe alkyle, aryle, arylalkyle, alkylaryle ou cycloalkyle, R₂, R₃ représentent chacun, indépendamment les uns des autres, un hydrogène, un groupe alkyle, aryle, arylalkyle, alkylaryle ou cycloalkyle.

11. Procédé selon l'une quelconque des revendications précédentes, dans lequel le composé A11 répond à la formule générale (ll'a1) ou (II'a2) :

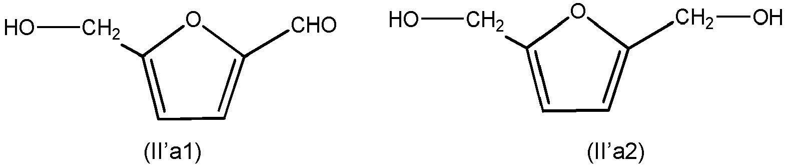

12. Procédé selon l'une quelconque des revendications précédentes, dans lequel au moins un des composés A1, A2, A3, A4, A5, A6 est un phénol choisi parmi :
∘ un polyphénol aromatique A21 comprenant au moins un noyau aromatique porteur d'au moins deux fonctions hydroxyle en position méta l'une par rapport à l'autre, les deux positions ortho d'au moins une des fonctions hydroxyle étant non substituées
∘ un monophénol aromatique A22 comprenant au moins un noyau aromatique à six chainons portant une unique fonction hydroxyle,
- les deux positions ortho de la fonction hydroxyle étant non substituées ou
- au moins une position ortho et la position para de la fonction hydroxyle étant non substituées
∘ un mélange de A21 et A22.

## Patentansprüche

1. Verfahren zur Herstellung eines verstärkten Produkts (34), das eine Matrix (38) auf Basis einer Zusammensetzung und mindestens ein Verstärkungselement (36) umfasst, wobei das oder die Verstärkungselemente in die Matrix (38) eingebettet sind, **dadurch gekennzeichnet, dass**:
• man einen Schritt des Herstellens der Zusammensetzung ausführt, die eine Mischung umfasst, die umfasst:
- mindestens eine Verbindung A1, die eine Schmelztemperatur T1 aufweist, und
- mindestens eine Verbindung A2, die eine Schmelztemperatur T2 aufweist,
wobei mindestens die Verbindung A1 und mindestens die Verbindung A2 bei einer Temperatur Tm gemischt werden, die derart ist, dass:
- T1 ≤ Tm < T2, so dass A2 in A1 solubilisiert wird und die Zusammensetzung in flüssigem Zustand erhalten wird, wobei die Zusammensetzung frei von organischem Lösungsmittel oder Wasser ist;
• man dann das oder die Verstärkungselement(e) (36) in die Zusammensetzung in flüssigem Zustand einbettet, man dann, wobei die Verbindung A1 mit der Verbindung A2 zum Bilden des Harzes durch Erhitzen ab einer Temperatur Tn reagiert, einen Schritt des Vernetzens eines Harzes auf Basis mindestens der Verbindung A1 und mindestens der Verbindung A2 durch Erhitzen der Zusammensetzung auf mindestens die Temperatur Tn ausführt, die derart ist, dass T1 ≤ Tm < Tn, so dass die Matrix (38) gebildet wird, in die das oder die Verstärkungselement(e) (36) eingebettet ist/sind, das als ein dreidimensionales Element definiert ist, das die mechanische Verstärkung einer Matrix ermöglicht, in die dieses dreidimensionale Verstärkungselement eingebettet werden soll;
wobei mindestens eine der Verbindungen A1, A2 gewählt ist aus:
• einer Verbindung A11, die mindestens zwei Funktionen umfasst, wobei die eine dieser Funktionen eine Hydroxymethylfunktion ist, wobei die andere eine Aldehydfunktion oder eine Hydroxymethylfunktion ist, oder
• einer Verbindung A12, die gewählt ist aus der Gruppe bestehend aus 1,2-Benzoldicarboxaldehyd, 1,3-Benzoldicarboxaldehyd, 1,4-Benzoldicarboxaldehyd, 2-Hydroxybenzol-1,3,5-tricarbaldehyd und den Mischungen dieser Verbindungen, oder
• einer Mischung aus einer Verbindung A11 und einer Verbindung A12.

2. Verfahren zur Herstellung eines verstärkten Produkts (34), das eine Matrix (38) auf Basis einer Zusammensetzung und mindestens ein Verstärkungselement (36) umfasst, wobei das oder die Verstärkungselemente in die Matrix (38) eingebettet sind, **dadurch gekennzeichnet, dass**:
• man einen Schritt des Herstellens der Zusammensetzung ausführt, die eine Mischung umfasst, die umfasst:
- mindestens eine Verbindung A3, die eine Schmelztemperatur T3 aufweist,
- mindestens eine Verbindung A4, die eine Schmelztemperatur T4 aufweist, und
- mindestens eine Verbindung A5, die eine Schmelztemperatur T5 aufweist,
wobei mindestens die Verbindungen A3, A4 und A5 bei einer Temperatur Tm gemischt werden, die derart ist, dass Tmin ≤ Tm < Tmax, wobei:
- Tmin die niedrigste Temperatur unter T3, T4 und T5 ist,
- Tmax ist die höchste Temperatur unter T3, T4 und T5 ist, und
- Tint die Temperatur unter T3, T4 und T5 ist, die derart ist, dass Tmin ≤ Tint ≤ Tmax,
so dass mindestens eine oder zwei der Verbindungen A3, A5, A4 in mindestens zwei anderen beziehungsweise einer anderen der Verbindungen A3, A5, A4 solubilisiert werden und die Zusammensetzung in flüssigem Zustand erhalten wird, wobei die Zusammensetzung frei von organischem Lösungsmittel oder Wasser ist;
• man dann das oder die Verstärkungselement(e) (36) in die Zusammensetzung in flüssigem Zustand einbettet, man dann, wobei die Verbindungen A3, A4 und A5 zum Bilden des Harzes durch Erhitzen ab einer Temperatur Tn miteinander reagieren, einen Schritt des Vernetzens eines Harzes auf Basis mindestens der Verbindungen A3, A4 und A5 durch Erhitzen der Zusammensetzung auf mindestens die Temperatur Tn ausführt, die derart ist, dass Tmin ≤ Tm < Tn, so dass die Matrix (38) gebildet wird, in die das oder die Verstärkungselement(e) (36) eingebettet ist/sind, das als ein dreidimensionales Element definiert ist, das die mechanische Verstärkung einer Matrix ermöglicht, in die dieses dreidimensionale Verstärkungselement eingebettet werden soll;
wobei mindestens eine der Verbindungen A3, A4, A5 gewählt ist aus:
• einer Verbindung A11, die mindestens zwei Funktionen umfasst, wobei die eine dieser Funktionen eine Hydroxymethylfunktion ist, wobei die andere eine Aldehydfunktion oder eine Hydroxymethylfunktion ist, oder
• einer Verbindung A12, die mindestens eine Aldehydfunktion umfasst, oder
• einer Mischung aus einer Verbindung A11 und einer Verbindung A12.

3. Verfahren zur Herstellung eines verstärkten Produkts (34), das eine Matrix (38) auf Basis einer Zusammensetzung und mindestens ein Verstärkungselement (36) umfasst, wobei das oder die Verstärkungselemente in die Matrix (38) eingebettet sind, **dadurch gekennzeichnet, dass**:
• man einen Schritt des Herstellens der Zusammensetzung ausführt, die eine Mischung umfasst, die umfasst:
- mindestens eine Verbindung A3, die eine Schmelztemperatur T3 aufweist,
- mindestens eine Verbindung A4, die eine Schmelztemperatur T4 aufweist,
- mindestens eine Verbindung A5, die eine Schmelztemperatur T5 aufweist,
- mindestens eine Verbindung A6, die eine Schmelztemperatur T6 aufweist,
wobei mindestens die Verbindungen A3, A4, A5 und A6 bei einer Temperatur Tm gemischt werden, die derart ist, dass Tmin ≤ Tm < Tmax, wobei:
- Tmin die niedrigste Temperatur unter T3, T4, T5 und T6 ist, und
- Tmax die höchste Temperatur unter T3, T4, T5 und T6 ist;
- Tint1 die Temperatur unter T3, T4, T5 und T6 ist, und
- Tint2 die Temperatur unter T3, T4, T5 und T6 ist, die derart sind, dass:
Tmin ≤ Tint1 ≤ Tint2 ≤ Tmax,
so dass eine, zwei oder drei der Verbindungen A3, A4, A5, A6 in drei, zwei oder einer anderen der Verbindungen A3, A4, A5, A6 solubilisiert werden und die Zusammensetzung in flüssigem Zustand erhalten wird, wobei die Zusammensetzung frei von organischem Lösungsmittel oder Wasser ist;
• man dann das oder die Verstärkungselement(e) (36) in die Zusammensetzung in flüssigem Zustand einbettet, man dann, wobei die Verbindungen A3, A4, A5 und A6 zum Bilden des Harzes durch Erhitzen ab einer Temperatur Tn miteinander reagieren, einen Schritt des Vernetzens eines Harzes auf Basis mindestens der Verbindungen A3, A4, A5 und A6 durch Erhitzen der Zusammensetzung auf mindestens die Temperatur Tn ausführt, die derart ist, dass Tmin ≤ Tm < Tn, so dass die Matrix (38) gebildet wird, in die das oder die Verstärkungselement(e) (36) eingebettet ist/sind, das als ein dreidimensionales Element definiert ist, das die mechanische Verstärkung einer Matrix ermöglicht, in die dieses dreidimensionale Verstärkungselement eingebettet werden soll;
wobei mindestens eine der Verbindungen A3, A4, A5, A6 gewählt ist aus:
• einer Verbindung A11, die mindestens zwei Funktionen umfasst, wobei die eine dieser Funktionen eine Hydroxymethylfunktion ist, wobei die andere eine Aldehydfunktion oder eine Hydroxymethylfunktion ist, oder
• einer Verbindung A12, die mindestens eine Aldehydfunktion umfasst, oder
• einer Mischung aus einer Verbindung A11 und einer Verbindung A12.

4. Verfahren nach einem der vorhergehenden Ansprüche, wobei Tn-Tm ≥ 5 °C und noch bevorzugter Tn-Tm ≥ 10 °C ist.

5. Verfahren nach einem der vorhergehenden Ansprüche, wobei Tn-Tm ≤ 100 °C und noch bevorzugter Tn-Tm ≤ 60 °C ist.

6. Verfahren nach einem der vorhergehenden Ansprüche, wobei man nach dem Schritt des Vernetzens des Harzes einen Schritt des finalen Vernetzens des Harzes durch Erhitzen auf eine Temperatur Tp mit Tn < Tp ausführt.

7. Verfahren nach dem vorhergehenden Anspruch, wobei die Temperatur Tp ≤ 200 °C ist.

8. Verfahren nach einem der Ansprüche 2 bis 7, wobei die Verbindung A12 gewählt ist aus der Gruppe bestehend aus 1,2-Benzoldicarboxaldehyd, 1,3-Benzoldicarboxaldehyd, 1,4-Benzoldicarboxaldehyd, 2-Hydroxybenzol-1,3,5-tricarbaldehyd und den Mischungen dieser Verbindungen.

9. Verfahren nach einem der Ansprüche 2 bis 7, wobei die Verbindung A12 gewählt ist aus der Gruppe bestehend aus Furfuraldehyd, 2,5-Furandicarboxaldehyd und den Mischungen dieser Verbindungen.

10. Verfahren nach einem der vorhergehenden Ansprüche, wobei die Verbindung A11 der allgemeinen Formel (II) entspricht: 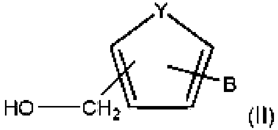 worin B für CHO oder CH₂OR steht, Y für O, NR₁, NO, S, SO, SO₂, SR₂R₃ steht, R₁ für Wasserstoff, eine Alkyl-, Aryl-, Arylalkyl-, Alkylaryl- oder Cycloalkylgruppe steht, R₂, R₃ jeweils unabhängig voneinander für Wasserstoff, eine Alkyl-, Aryl-, Arylalkyl-, Alkylaryl- oder Cycloalkylgruppe stehen.

11. Verfahren nach einem der vorhergehenden Ansprüche, wobei die Verbindung A11 der allgemeinen Formel (II'a1) oder (II'a2) entspricht:

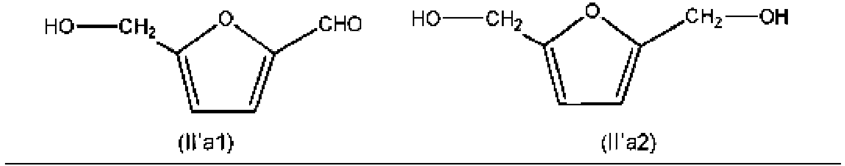

12. Verfahren nach einem der vorhergehenden Ansprüche, wobei mindestens eine der Verbindungen A1, A2, A3, A4, A5, A6 ein Phenol ist, das gewählt ist aus:
∘ einem aromatischen Polyphenol A21, das mindestens einen aromatischen Kern umfasst, der mindestens zwei Hydroxylfunktionen in meta-Position zueinander trägt, wobei die beiden ortho-Positionen mindestens einer der Hydroxylfunktionen unsubstituiert sind
∘ einem aromatischen Monophenol A22, das mindestens einen sechsgliedrigen aromatischen Kern umfasst, der eine einzige Hydroxylfunktion trägt,
- wobei die beiden ortho-Positionen der Hydroxylfunktion unsubstituiert sind oder
- wobei mindestens eine ortho-Position und die para-Position der Hydroxylfunktion unsubstituiert sind
∘ einer Mischung von A21 und A22.

## Claims

1. Process for the manufacture of a reinforced product (34) comprising a matrix (38) based on a composition and at least one reinforcing element (36), the reinforcing element(s) being embedded in the matrix (38), **characterized in that:**
• a stage of manufacture of the composition comprising a mixture comprising:
- at least one compound A1 exhibiting a melting point T1, and
- at least one compound A2 exhibiting a melting point T2, is carried out by mixing at least the compound A1 and at least the compound A2 at a temperature Tm such that:
- T1 ≤ Tm < T2, so as to dissolve A2 in A1 and to obtain the composition in the liquid state, the composition is devoid of any organic solvent or of water;
• then the reinforcing element(s) (36) is/are drowned in the composition in the liquid state,
• then, as the compound A1 reacts with the compound A2 to form the resin by heating from a temperature Tn, a stage of crosslinking a resin based on at least the compound A1 and on at least the compound A2 is carried out by heating the composition to at least the temperature Tn such that T1 ≤ Tm < Tn so as to form the matrix (38) in which the reinforcing element(s) (36) is/are embedded defined as a three-dimensional element which makes possible the mechanical reinforcement of a matrix in which this three-dimensional reinforcing element is intended to be embedded;
wherein one base constituent of the resin A1, A2, being chosen from:
• a compound A11 comprising at least one aromatic nucleus bearing at least two functional groups, one of these functional groups being a hydroxymethyl functional group and the other being an aldehyde functional group or a hydroxymethyl functional group, or
• a compound A12 is selected from 1,2-benzenedicarboxaldehyde, 1,3-benzenedicarboxaldehyde, 1,4-benzenedicarboxaldehyde, 2-hydroxybenzene-1,3,5-tricarbaldehyde and the mixtures of these compounds, or
• a mixture of a compound A11 and of a compound A12.

2. Process for the manufacture of a reinforced product (34) comprising a matrix (38) based on a composition and at least one reinforcing element (36), the reinforcing element(s) being embedded in the matrix (38), **characterized in that:**
• a stage of manufacture of the composition comprising a mixture comprising:
- at least one compound A3 exhibiting a melting point T3,
- at least one compound A4 exhibiting a melting point T4, and
- at least one compound A5 exhibiting a melting point T5, is carried out by mixing at least the compounds A3, A4 and A5 at a temperature Tm such that Tmin ≤ Tm < Tmax, in which:
- Tmin is the lowest temperature among T3, T4 and T5,
- Tmax is the highest temperature among T3, T4 and T5, and
- Tint is the temperature among T3, T4 and T5 such that Tmin ≤ Tint ≤ Tmax,
so as to dissolve at least one or two of the compounds A3, A5, A4 respectively in at least two others or another of the compounds A3, A5, A4 and to obtain the composition in the liquid state, the composition is devoid of any organic solvent or of water;
• then the reinforcing element(s) (36) is/are drowned in the composition in the liquid state,
• then, as the compounds A3, A4 and A5 react together to form the resin by heating from a temperature Tn, a stage of crosslinking a resin based on at least the compounds A3, A4 and A5 is carried out by heating the composition to at least the temperature Tn such that Tmin ≤ Tm < Tn so as to form the matrix (38) in which the reinforcing element(s) (36) is/are embedded, defined as a three-dimensional element which makes possible the mechanical reinforcement of a matrix in which this three-dimensional reinforcing element is intended to be embedded;
wherein one base constituent of the resin A3, A4, A5 being chosen from:
• a compound A11 comprising at least one aromatic nucleus bearing at least two functional groups, one of these functional groups being a hydroxymethyl functional group and the other being an aldehyde functional group or a hydroxymethyl functional group, or
• a compound A12 is selected from 1,2-benzenedicarboxaldehyde, 1,3-benzenedicarboxaldehyde, 1,4-benzenedicarboxaldehyde, 2-hydroxybenzene-1,3,5-tricarbaldehyde and the mixtures of these compounds, or
• a mixture of a compound A11 and of a compound A12.

3. Process for the manufacture of a reinforced product (34) comprising a matrix (38) based on a composition and at least one reinforcing element (36), the reinforcing element(s) being embedded in the matrix (38), **characterized in that:**
• a stage of manufacture of the composition comprising a mixture comprising:
- at least one compound A3 exhibiting a melting point T3,
- at least one compound A4 exhibiting a melting point T4,
- at least one compound A5 exhibiting a melting point T5,
- at least one compound A6 exhibiting a melting point T6,
is carried out by mixing at least the compounds A3, A4, A5 and A6 at a temperature Tm such that Tmin ≤ Tm < Tmax, in which:
- Tmin is the lowest temperature among T3, T4, T5 and T6, and
- Tmax is the highest temperature among T3, T4, T5 and T6,
- Tint1 is the temperature among T3, T4, T5 and T6, and
- Tint2 is the temperature among T3, T4, T5 and T6 such that: Tmin ≤ Tint1 ≤ Tint2 ≤ Tmax,
so as to dissolve one, two or three of the compounds A3, A4, A5, A6 in respectively three, two or another of the compounds A3, A4, A5, A6 and to obtain the composition in the liquid state; the composition is devoid of any organic solvent or of water;
• then the reinforcing element(s) (36) is/are drowned in the composition in the liquid state,
• then, as the compounds A3, A4, A5 and A6 react together to form the resin by heating from a temperature Tn, a stage of crosslinking a resin based on at least the compounds A3, A4, A5 and A6 is carried out by heating the composition to at least the temperature Tn such that Tmin ≤ Tm < Tn so as to form the matrix (38) in which the reinforcing element(s) (36) is/are embedded, defined as a three-dimensional element which makes possible the mechanical reinforcement of a matrix in which this three-dimensional reinforcing element is intended to be embedded;
wherein one base constituent of the resin A3, A4, A5, A6 being chosen from:
• a compound A11 comprising at least one aromatic nucleus bearing at least two functional groups, one of these functional groups being a hydroxymethyl functional group and the other being an aldehyde functional group or a hydroxymethyl functional group, or
• a compound A12 is selected from 1,2-benzenedicarboxaldehyde, 1,3-benzenedicarboxaldehyde, 1,4-benzenedicarboxaldehyde, 2-hydroxybenzene-1,3,5-tricarbaldehyde and the mixtures of these compounds, or
• a mixture of a compound A11 and of a compound A12.

4. Process according to any one of the preceding claims, in which Tn-Tm ≥ 5°C and more preferentially Tn-Tm ≥ 10°C.

5. Process according to any one of the preceding claims, in which Tn-Tm ≤ 100°C and more preferentially Tn-Tm ≤ 60°C.

6. Process according to any one of the preceding claims, in which, subsequent to the stage of crosslinking of the resin, a stage of final crosslinking of the resin is carried out by heating to a temperature Tp with Tn < Tp.

7. Process according to the preceding claim, in which the temperature Tp ≤ 200°C.

8. Process according to any one of the claims 2 to 7, in which the compound A12 is selected from the group consisting of 1,2-benzenedicarboxaldehyde, 1,3-benzenedicarboxaldehyde, 1,4-benzenedicarboxaldehyde, 2-hydroxybenzene-1,3,5-tricarbaldehyde and the mixtures of these compounds.

9. Process according to any one of the claims 2 to 7, in which the compound A12 is selected from the group consisting of furfuraldehyde, 2,5-furandicarboxaldehyde and the mixtures of these compounds.

10. Process according to any one of the preceding claims, in which the compound A11 corresponds to the general formula (II): 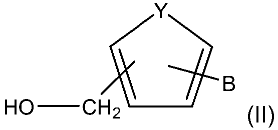 where B represents CHO or CH₂OH, Y represents O, NR₁, NO, S, SO, SO₂ or SR₂R₃, R₁ represents a hydrogen or an alkyl, aryl, arylalkyl, alkylaryl or cycloalkyl group and R₂ and R₃ each represent, independently of each other, a hydrogen or an alkyl, aryl, arylalkyl, alkylaryl or cycloalkyl group.

11. Process according to any one of the preceding claims, in which the compound A11 corresponds to the general formula (II'a1) or (II'a2):

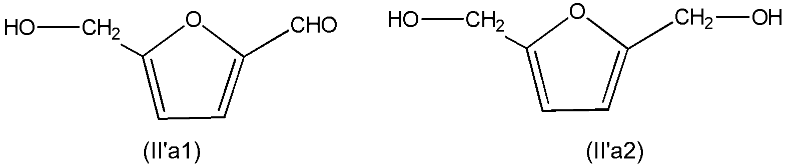

12. Process according to any one of the preceding claims, in which at least one of the compounds A1, A2, A3, A4, A5, A6 is a phenol chosen from:
∘ an aromatic polyphenol A21 comprising at least one aromatic nucleus bearing at least two hydroxyl functional groups in the meta position with respect to each other, the two positions ortho to at least one of the hydroxyl functional groups being unsubstituted,
∘ an aromatic monophenol A22 comprising at least one six-membered aromatic nucleus bearing a single hydroxyl functional group,
- the two positions ortho to the hydroxyl functional group being unsubstituted, or
- at least one position ortho to and the position para to the hydroxyl functional group being unsubstituted,
∘ a mixture of A21 and A22.
